# EUROPÄISCHE PATENTSCHRIFT

(11) **EP 3 043 951 B1**
(45) Veröffentlichungstag und Bekanntmachung des Hinweises auf die Patenterteilung: **05.09.2018**
(21) Anmeldenummer: 14741231.6
(22) Anmeldetag: 07.07.2014
(51) Int. Cl.: B23K 26/03, B23K 26/06, B23K 26/38, B23K 31/12

(54) **VORRICHTUNG UND VERFAHREN ZUR ÜBERWACHUNG, INSBESONDERE ZUR REGELUNG, EINES SCHNEIDPROZESSES**
DEVICE AND METHOD FOR MONITORING, MORE PARTICULARLY CONTROLLING, A CUTTING PROCESS
DISPOSITIF ET PROCÉDÉ DE SURVEILLANCE, ET EN PARTICULIER DE RÉGLAGE, D'UN PROCESSUS DE COUPE

(30) Priorität: 13.09.2013 DE 102013218421
(43) Veröffentlichungstag der Anmeldung: 20.07.2016
(60) Teilanmeldung: 17158293.5
(73) Patentinhaber: Trumpf Werkzeugmaschinen GmbH + Co. KG, 71254 Ditzingen (DE)
(72) Erfinder: REEGARD, Boris, 70499 Stuttgart (DE); SCHINDHELM, David, 70176 Stuttgart (DE)
(74) Vertreter: Kohler Schmid Möbus Patentanwälte
(86) Internationale Anmeldenummer: PCT/EP2014/064478
(87) Internationale Veröffentlichungsnummer: WO 2015/036140

(56) Entgegenhaltungen:
- WO-A1-2012/107331
- WO-A1-2012/163545
- DE-A1-102008 030 374
- DE-A1-102008 053 397
- DE-B3-102008 060 384
- DE-B3-102012 001 609
- US-A1- 2005 029 326
- US-A1- 2005 252 895
- US-B2- 6 621 047

## Beschreibung

Die vorliegende Erfindung betrifft eine Vorrichtung gemäß Anspruch 1 und ein zugehöriges Verfahren gemäß Anspruch 21 zur Überwachung, insbesondere zur Regelung, eines Schneidprozesses an einem Werkstück.

Eine Vorrichtung zur Überwachung eines Laserschneidprozesses, die zur Erfassung von charakteristischen Kenngrößen eines Laserschneidprozesses, beispielsweise eines bevorstehenden Schnittabrisses, dienen kann, ist aus der WO 2012/107331 A1 der Anmelderin bekannt geworden. Ein drohender Schnittabriss wird dort beim Unterschreiten einer vorgegebenen Spaltbreite des Schnittspalts erkannt. Alternativ oder zusätzlich wird die Fläche der beobachteten Schneidfront mit einer Referenzfläche verglichen, welche der Fläche der Schneidfront bei einem Gutschnitt bzw. Qualitätsschnitt entspricht. Ein Schnittabriss kann auch detektiert werden, falls die von der Referenzfläche emittierte Strahlungsintensität einen Grenzwert für die Soll-Helligkeit bei einem Normalschnitt überschreitet.

In der WO 2013/053832 A1 wird eine Vorrichtung beschrieben, welche bei einem Laserschneidprozess zurückgestreutes Licht misst, um die Schnittqualität zu überprüfen. Die gemessene Intensität des zurückgestreuten Lichts ist geringer, wenn der Schnitt sich tatsächlich durch das Werkstück erstreckt. Um den Abtransport von Schlacke zu optimieren, werden die Frequenz bzw. der Druck von beim Schneidprozess verwendeten Gaspulsen mittels einer Steuerungseinrichtung so angepasst, dass die gemessene Intensität des zurückgestreuten Lichts einen minimalen Wert annimmt.

Generelle Ursache für einen Schnittabriss ist eine unzureichende Energieeinbringung in das Werkstück. Die zu geringe Streckenenergie führt zu einer Abflachung der Schneidfront, d.h. zu einer Vergrößerung des Schneidfrontwinkels, wodurch die Schmelze an der Schnittunterkante nicht mehr vollständig ausgetrieben werden kann und in der Schnittfuge erstarrt. Der Verschluss der Schnittunterkante führt zu Prozessunregelmäßigkeiten, die i.d.R. einen Trennschnitt dauerhaft verhindern. Der Schneidfrontwinkel, der eine charakteristische Kenngröße des Schnittspalts darstellt, ist daher ein Indikator für einen drohenden Schnittabriss.

Die Schneidfront bzw. der Schneidfrontwinkel kann prinzipiell durch eine senkrechte Beobachtung der vom Wechselwirkungsbereich ausgehenden Temperaturstrahlung koaxial zum Hochleistungsstrahl messbar gemacht werden. Bei bekannter Werkstückdicke kann anhand der Länge des abstrahlenden Bereichs in der Schnittfuge auf den Schneidfrontwinkel geschlossen werden. Problematisch ist dabei, dass ein abtropfender Schmelzfaden unterhalb des Werkstücks zu einer Verlängerung des abstrahlenden Bereichs führt, so dass eine Messung des Schneidfrontwinkels auf diese Weise nicht zuverlässig möglich ist.

In der WO 2012/107331 A1 wird vorgeschlagen, eine Schneidfrontoberkante und eine Schneidfrontunterkante als Materialbegrenzungen des Werkstücks zu detektieren und daraus unter Berücksichtigung der Dicke des Werkstücks den Schneidfrontwinkel des Laserschneidprozesses zu ermitteln. Zu diesem Zweck wird der Abstand zwischen der Schneidfrontoberkante und der Schneidfrontunterkante entlang der Spaltmitte des Schnittspalts bzw. der Schnittfuge typischer Weise im sichtbaren Wellenlängenbereich gemessen. Weicht der Schneidfrontwinkel von einem Sollwert bzw. einem Sollbereich ab, kann dies auf einen Schneidfehler oder einen nicht optimalen Arbeitspunkt hindeuten, der durch geeignete Maßnahmen, z.B. durch eine Anpassung der Schnittgeschwindigkeit, korrigiert werden kann.

Bei der koaxialen Prozessbeobachtung durch die Schneiddüse hindurch besteht sowohl bei der Beobachtung der Temperaturstrahlung, der rückgestreuten Hochenergiestrahlung als auch bei der Beobachtung von Materialbegrenzungen das Problem, dass der Beobachtungsbereich durch die in der Regel kreisförmige Innenkontur der Schneiddüse begrenzt ist. Insbesondere bei Brennschneidprozessen werden kleine Düsendurchmesser eingesetzt, so dass die Schneidfrontunterkante auch bei einem Gutschnitt außerhalb des durch die Düsenmündung begrenzten Beobachtungsbereichs liegt und der Schneidfrontwinkel nicht zuverlässig bestimmt werden kann.

In der DE 10 2011 016 519 A1 sind ein Verfahren und eine Vorrichtung zum Steuern der Bearbeitung eines Werkstücks mittels eines hochenergetischen Bearbeitungsstrahls beschrieben, bei dem der Bearbeitungsstrahl durch eine Linse hindurchtritt, die zum Verschieben einer Auftreffstelle des Bearbeitungsstrahls auf das Werkstück senkrecht zu ihrer optischen Achse bewegt werden kann. In einem Beispiel ist eine Überwachungskamera zur Erzeugung eines elektronisch auswertbaren Bildes vorgesehen, deren Abbildungsstrahlengang durch die Linse auf die Auftreffstelle fokussiert wird.

Aus der WO 2012/107331 A1 ist es auch bekannt, anhand des Bildes des Wechselwirkungsbereichs auf das Vorliegen oder Fehlen einer Gratbildung am Schnittspalt zu schließen. Beispielsweise kann bei einem Schmelzschneidprozess anhand des Fehlens einer wiederkehrenden Schwankung der Intensität des Wärmebildes im Bereich des Schnittspalts und/oder beim Auftreten von drei von der Schneidfront ausgehenden Leuchtstreifen auf das Vorliegen einer Gratbildung geschlossen werden. Bei einem Baustahl-Brennschneidprozess (unter Verwendung von Sauerstoff als Schneidgas) können im Wärmebild oder im sichtbaren Wellenlängenbereich periodisch wiederkehrende Rillen bzw. Riefen an den Schnittkanten der Schnittfuge detektiert werden und anhand der Frequenz der Riefen kann auf einen bevorstehenden Materialabbrand geschlossen werden.

Aus der Dissertation "Überwachung, Regelung und Automatisierung beim Hochgeschwindigkeitsschneiden von Elektroblechen mit Laserstrahlen" von Frank Schneider, Shaker Verlag, 2005, wird das Hochgeschwindigkeitsschneiden mit Schneid- bzw. Vorschubgeschwindigkeiten von bis zu 100 m/min thematisiert. Bei dieser Anwendung kann sich hinter der Schneidfront ein Schmelzestau ausbilden, der bei hoher Geschwindigkeit so groß werden kann, dass die Kapillare zwischen der Schmelze und der Schneidfront temporär vom Schmelzefluss nach unten verschlossen wird. In diesem Fall wird die Laserstrahlung aus der verstopften Kapillare zurück reflektiert und von einem Pyrodetektor oder einer Thermosäule in schleppender bzw. nachlaufender Beobachtung gemessen. Bei der schleppenden Beobachtung und bei hohen Geschwindigkeiten kommt es zu starken, kurzen Reflexionen und somit zu einem stark fluktuierenden gemessenen Signal. Da die Standardabweichung des gemessenen Signals mit zunehmender Geschwindigkeit typischer Weise zunimmt, kann der Hochgeschwindigkeitsschneidprozess anhand der Standardabweichung geregelt werden.

Aus der gattunsgemäßen US 6,621,047 B2 ist ein Verfahren zur Überwachung einer Laserbearbeitung bekannt geworden, bei dem ein vorgegebenes Beobachtungsfeld im Bereich einer Wechselwirkungszone zwischen dem Laserstrahl und dem Werkstück ausgewählt wird. Von dem ausgewählten Beobachtungsfeld ausgehende Strahlung wird mit einem strahlungssensitiven Empfänger detektiert.

In der US 2005/0252895 A1 ist eine Sensorvorrichtung zum Detektieren von Strahlung aus dem Bereich einer Wechselwirkungszone zwischen einem Laserstrahl und einem Werkstück beschrieben, die eine strahlungssensitive Empfängeranordnung sowie eine Abbildungsvorrichtung aufweist, die einen zu überwachenden Bereich aus der Wechselwirkungszone auf die Empfängeranordnung abbildet. Die Abbildungsvorrichtung weist ein fokussierendes optisches Element auf, das Strahlung, die von dem zu überwachenden Bereich ausgeht, aus dem Bearbeitungsstrahlengang umlenkt und auf die Empfängeranordnung fokussiert.

In der DE 10 2012 001 609 B3 ist ein Laserbearbeitungskopf beschrieben, der eine Strahlformungsoptik, eine Fokussieroptik sowie eine Kamera mit einer davor im Strahlengang angeordneten verstellbaren Abbildungsoptik aufweist. Eine Abbildung eines Bearbeitungsbereichs des Werkstücks auf einen ersten Sensorbereich der Kamera erfolgt durch einen ersten Beobachtungsstrahlengang über die Fokussieroptik und die Abbildungsoptik. Eine Abbildung des Strahlformungsoptikabbildungsbereichs auf einen zweiten Sensorbereich der Kamera erfolgt durch einen zweiten Beobachtungsstrahlengang über die Strahlformungsoptik und die Abbildungsoptik.

In der DE 10 2008 060 384 B3 ist ein Sensorsystem zur Überwachung eines an einem Werkstück durchzuführenden Laserbearbeitungsvorgangs beschrieben. Bei dem Sensorsystem ist eine Aufnahmevorrichtung in Beobachtungsrichtung hinter einer Abbildungsoptik angeordnet, die relativ zur Abbildungsoptik verstellbar ist. Ein Lichtquellenmodul ist in einer vorbestimmten Lage relativ zur Aufnahmevorrichtung in diese einsetzbar und umfasst eine Lichtquelle mit einer ersten Ortsfilterblende, wobei die erste Ortsfilterblende durch die Abbildungsoptik auf ein Gebiet im Bereich einer Wechselwirkungszone zwischen Laserstrahl und Werkstück abbildbar ist, um durch Verstellung der Aufnahmevorrichtung ein bestimmtes Beobachtungsfeld in der Wechselwirkungszone auszuwählen.

Aus der WO 2012/163545 A1 sind eine Vorrichtung und ein Verfahren gemäß dem Oberbegriff der Ansprüche 1 und 21 bekannt geworden.

### Aufgabe der Erfindung

Der Erfindung liegt die Aufgabe zugrunde, Vorrichtungen und zugehörige Verfahren zur Überwachung, insbesondere zur Regelung, eines Schneidprozesses bereitzustellen, die eine zuverlässige Ermittlung von charakteristischen Kenngrößen des Schneidprozesses, insbesondere von charakteristischen Kenngrößen einer bei dem Schneidprozess gebildeten Schnittfuge sowie ggf. eine vorteilhafte Regelung des Schneidprozesses ermöglichen.

### Gegenstand der Erfindung

Ein erster Aspekt der Erfindung betrifft eine Vorrichtung zur Überwachung, insbesondere zur Regelung, eines Schneidprozesses an einem Werkstück, umfassend: ein Fokussierelement zur Fokussierung eines Hochenergiestrahls, insbesondere eines Laserstrahls, auf das Werkstück,eine Bilderfassungseinrichtung zur Erfassung eines zu überwachenden Bereichs an dem Werkstück, der einen Wechselwirkungsbereich des Hochenergiestrahls mit dem Werkstück umfasst, sowie eine Auswerteeinrichtung, die ausgebildet ist, anhand des erfassten Wechselwirkungsbereichs mindestens eine charakteristische Kenngröße (a) des Schneidprozesses, insbesondere einer bei dem Schneidprozess gebildeten Schnittfuge, zu ermitteln, wobei die Bilderfassungseinrichtung zur Bildung eines Beobachtungsstrahls zur Beobachtung des Wechselwirkungsbereichs aus einer unter einem Winkel (β) zur Strahlachse des Hochenergiestrahls verlaufenden Beobachtungsrichtung (R1) ausgebildet ist, und wobei die Bilderfassungseinrichtung eine Abbildungsoptik zur Erzeugung eines Bildes (B1) des Wechselwirkungsbereichs aus der unter dem Winkel (β) zur Strahlachse des Hochenergiestrahls verlaufenden Beobachtungsrichtung (R1) sowie einen Detektor, insbesondere eine Kamera, mit einer Detektorfläche umfasst, an der das Bild (B1) erzeugt wird,wobei die Abbildungsoptik ausgebildet ist, den exzentrisch zur zentralen Achse des Fokussierelements laufenden und somit im konvergenten Strahlengang zwischen dem Fokussierelement und dem Werkstück unter dem Winkel (β) zur Strahlachse des Hochenergiestrahls verlaufenden Beobachtungsstrahl auf die Detektorfläche abzubilden, dadurch gekennzeichnet, dass die Vorrichtung eine Steuereinrichtung umfasst, die ausgebildet ist, die Ausrichtung der Beobachtungsrichtung (R1, R2, ...) in einer Projektion in eine Ebene (X, Y) senkrecht zur Strahlachse in Abhängigkeit von einer Vorschubrichtung (v) des Schneidprozesses zu verändern. Das zur Ermittlung der mindestens einen charakteristischen Kenngröße vorgeschlagene Messprinzip basiert auf der Erfassung (mindestens) eines Bildes des Wechselwirkungsbereichs aus (mindestens) einem Blickwinkel bzw. aus mindestens einer Beobachtungsrichtung, die unter einem Winkel zur Strahlachse des Hochenergiestrahls verläuft, d.h. der den Beobachtungsstrahl bildende Teil des Beobachtungsstrahlengangs verläuft im konvergenten Strahlengang zwischen Fokussierelement und Werkstück unter einem Winkel zur optischen Achse des Fokussierelements und damit zur Strahlachse des Hochenergiestrahls. Anhand eines solchen Beobachtungsstrahls können bei geeigneter Auswertung des aufgenommenen Bildes charakteristische Kenngrößen des Schneidprozesses, insbesondere der Schnittfuge, ermittelt und falls erforderlich kann in den Schneidprozess eingegriffen werden, um eine Optimierung hinsichtlich der Schnittqualität vorzunehmen.

Der koaxial zur Strahlachse des Hochenergiestrahls verlaufende Beobachtungsstrahlengang verläuft an der Eintrittsseite des Fokussierelements parallel zur Strahlachse des Hochenergiestrahls bzw. konzentrisch zur Strahlachse des Hochenergiestrahls. Um aus dem koaxialen Beobachtungsstrahlengang einen nicht koaxialen Beobachtungsstrahl zu erzeugen bzw. auszuwählen, kann z.B. eine Blende im Beobachtungsstrahlengang vorgesehen sein. Die Abbildungsoptik bildet den mindestens einen, insbesondere genau einen, exzentrisch, d.h. nicht durch die zentrale Achse des Fokussierelements laufenden und somit im konvergenten Strahlengang zwischen Fokussierelement und Werkstück unter einem Winkel zum Werkstück bzw. zur Strahlachse des Hochenergiestrahls verlaufenden Beobachtungsstrahl auf eine Detektorfläche ab.

Durch die Beobachtung unter einem Winkel zur Strahlachse können charakteristische Kenngrößen, insbesondere Eigenschaften der Schnittfuge, ermittelt werden, die bei einer koaxialen bzw. senkrechten Beobachtung des Wechselwirkungsbereichs nicht erkennbar wären. Unter einem Beobachtungsstrahl, der unter einem Winkel zur Strahlachse verläuft, wird ein Strahlenbündel verstanden, bei dem der Hauptstrahl des Beobachtungsstrahls zum Hauptstrahl des zur Bearbeitung verwendeten Hochenergiestrahls im konvergenten Strahlengang zwischen dem Fokussierelement und dem Werkstück um mindestens ca. 2° voneinander abweichen.

Die Vorrichtung umfasst eine Steuerungseinrichtung, die ausgebildet ist, die Ausrichtung der Beobachtungsrichtung in der Ebene senkrecht zur Strahlachse in Abhängigkeit von einer Vorschubrichtung des Schneidprozesses zu verändern. Wie weiter oben beschrieben wurde, können bestimmte charakteristische Kenngrößen, beispielsweise die Schneidfrontsteigung, nur unter bestimmten Beobachtungrichtungen relativ zur Vorschubrichtung ermittelt werden. Die Steuerungseinrichtung kann zur Steuerung der Beobachtungsrichtung die Bilderfassungseinrichtung zur Veränderung der Ausrichtung der Beobachtungsrichtung und/oder die Auswerteeinrichtung so ansteuern, dass letztere einen geeigneten, der gewünschten Beobachtungsrichtung zugeordneten Bereich der Detektorfläche auswertet.

Bei einer Ausführungsform ist die Bilderfassungseinrichtung ausgebildet, die Ausrichtung der Beobachtungsrichtung des Beobachtungsstrahls in einer Ebene senkrecht zur Strahlachse des Hochenergiestrahls zu verändern. Typischer Weise verläuft diese Ebene parallel zur Auflageebene bzw. zur Oberfläche des in der Regel plattenförmigen Werkstücks. Die momentane Vorschubrichtung des Laserschneidprozesses, d.h. die Richtung, entlang derer der Hochenergiestrahl und das Werkstück entlang der Auflageebene relativ zueinander bewegt werden, hängt von der zu schneidenden Kontur an dem Werkstück ab. Die momentane Vorschubrichtung und damit die Richtung, in welcher sich die Schnittfuge erstreckt, verändert sich typischer Weise während des Schneidprozesses. Um eine bestimmte charakteristische Kenngröße während des Schneidprozesses dauerhaft ermitteln zu können, sollte die Ausrichtung der Beobachtungsrichtung relativ zur Vorschubrichtung, d.h. relativ zu der Richtung, entlang derer die Schnittfuge gebildet wird, möglichst konstant bleiben. Dies kann dadurch erreicht werden, dass die Bilderfassungseinrichtung die Beobachtungsrichtung während des Schneidprozesses geeignet verändert. Für die Änderung der Ausrichtung der Beobachtungsrichtung bestehen mehrere Möglichkeiten.

Bei einer Ausführungsform weist die Bilderfassungseinrichtung zur Veränderung der Ausrichtung der Beobachtungsrichtung des Beobachtungsstrahls eine Blende auf. In diesem Fall kann eine zur Strahlachse des Hochenergiestrahls symmetrische Abbildung erfolgen. Eine Blendenöffnung, durch welche die Beobachtungsstrahlung hindurch tritt, erzeugt in diesem Fall einen Beobachtungsstrahl, welcher der Beobachtungsrichtung zugeordnet ist. Zur Veränderung der Orientierung bzw. der Ausrichtung des Beobachtungsstrahls kann die (mechanische) Blende im einfachsten Fall als drehbare (Loch-)Blende mit einer exzentrisch zur Strahlachse des Hochenergiestrahls angeordneten Blendenöffnung ausgebildet sein. Eine solche Lochblende kann beispielsweise mit konstanter Winkelgeschwindigkeit gedreht und die jeweils gewünschte Beobachtungsrichtung durch einen synchronisierten Aufnahmezeitpunkt der Bilderfassungseinrichtung eingestellt werden. Alternativ oder zusätzlich kann die (Loch-)Blende verschiebbar ausgebildet sein, um einen gewünschten Bereich des Beobachtungsstrahlengangs abzuschatten bzw. um die Ausrichtung des Beobachtungsstrahls zu beeinflussen.

Die Blende kann auch als schaltbare Blende ausgebildet sein, beispielsweise in Form eines elektronischen Shutters (z.B. eines LCD-Bildschirms oder einem LCOS-Display mit schaltbaren Pixeln, die jeweils einen Teilbereich des Beobachtungsstrahlengangs abschatten) oder eines mechanischen Shutters, der mehrere mechanisch ansteuerbare Elemente aufweist, die mittels einer Steuerungseinrichtung zwischen zwei Schaltzuständen umgeschaltet werden können, um jeweils einen Teilbereich des Beobachtungsstrahlengangs zu verdecken bzw. zu öffnen. Es versteht sich, dass zur hochauflösenden Beobachtung des zu überwachenden Bereichs des Werkstücks mit dem Ziel einer Prozessbeobachtung weitere Bereiche der Apertur des Beobachtungsstrahlengangs geöffnet oder geschlossen werden können.

Bei einer weiteren Ausführungsform ist die Abbildungsoptik zur Erzeugung einer Mehrzahl von Bildern des Wechselwirkungsbereichs aus unterschiedlich ausgerichteten Beobachtungsrichtungen ausgebildet. In diesem Fall können mehrere Bilder des Wechselwirkungsbereichs gleichzeitig aufgenommen und auf einer oder auf mehreren Detektorflächen abgebildet werden. Die Auswerteeinrichtung kann in diesem Fall nur denjenigen Abschnitt bzw. diejenigen Abschnitte der Detektorfläche auswerten, die einer jeweils gewünschten Beobachtungsrichtung entsprechen, so dass auch in diesem Fall die Beobachtungsrichtung in einer Ebene senkrecht zur Strahlachse verändert werden kann, indem zwischen aus unterschiedlichen Beobachtungsrichtungen aufgenommenen Bildern umgeschaltet werden kann, um eine charakteristische Kenngröße des Schneidprozesses zu ermitteln.

Gegebenenfalls kann die Abbildungsoptik auch ausgebildet sein, ein Bild des Wechselwirkungsbereichs in einer koaxial zur Strahlachse des Hochenergiestrahls verlaufenden Beobachtungsrichtung aufzunehmen, d.h. parallel zur Strahlachse des Hochenergiestrahls (typischer Weise senkrecht zur Werkstückebene), beispielsweise um Materialbegrenzungen des Werkstücks, z.B. die Schnittkanten der Schnittfuge zu detektieren. Insbesondere kann eine solche Beobachtung mit einer hohen Auflösung erfolgen.

Bei einer Weiterbildung weist die Abbildungsoptik zur Erzeugung der Mehrzahl von Bildern des Wechselwirkungsbereichs aus unterschiedlichen Beobachtungsrichtungen eine Mehrzahl von abbildenden optischen Elementen auf. Bei den abbildenden optischen Elementen kann es sich beispielsweise um sphärische oder asphärische Linsenelemente handeln. Die Linsenelemente können in einem Abstand voneinander angeordnet sein, der näherungsweise dem Abstand zwischen den Bildern auf der Detektorfläche entspricht. Jedes der abbildenden optischen Elemente erzeugt hierbei einen eigenen Abbildungs- bzw. Beobachtungsstrahl zur Erzeugung des jeweils zugehörigen Bildes auf einem zugehörigen Bereich der Detektorfläche. Die Linsenelemente sind typischer Weise außermittig, d.h. nicht koaxial zum Strahlengang des Hochenergiestrahls bzw. zu dessen Verlängerung im Beobachtungsstrahlengang angeordnet, um die gewünschte Beobachtung unter einem Winkel zur Strahlrichtung des Hochenergiestrahls zu ermöglichen.

Bei einer Weiterbildung sind die abbildenden optischen Elemente in einem Linsenarray bzw. in einer Rasteranordnung angeordnet. Eine Rasteranordnung von Linsenelementen ("Lenslet" bzw. Linsenarray), z.B. von Mikrolinsen, kann in Form von in Reihen und Spalten angeordneten Linsen oder auch in Form von zwei gekreuzten Zylinderlinsenarrays realisiert werden. In letzterem Fall weist die Abbildungsoptik zusätzlich zu Zylinderlinsen eines ersten Zylinderlinsenarrays, die eine Krümmung bzw. eine abbildende Wirkung entlang einer ersten Achse erzeugen, ein zweites Zylinderlinsenarray auf, welche eine abbildende Wirkung entlang einer zweiten, zur ersten senkrechten Achse erzeugen. Durch die gekreuzten Zylinderlinsen kann die Abbildungsoptik einerseits kostengünstig hergestellt werden und andererseits kann der verfügbare Abbildungsquerschnitt gut genutzt werden.

Zusätzlich oder alternativ zur Verwendung von abbildenden optischen Elementen zur Erzeugung eines oder mehrerer Bilder kann die Abbildungsoptik zu diesem Zweck auch eine Einrichtung zur Bildung eines jeweiligen Beobachtungsstrahls durch Beeinflussen einer Strahlrichtung eines Beobachtungsstrahlengangs aufweisen.

Die Einrichtung kann beispielsweise als Umlenkeinrichtung mit mindestens einem einer Beobachtungsrichtung zugeordneten Strahlumlenkbereich ausgebildet sein.

Beispielsweise kann die einfallende Beobachtungsstrahlung in diesem Fall von der Umlenkeinrichtung auf einen oder mehrere unterschiedliche Bereiche eines abbildenden optischen Elements, beispielsweise eines Linsenelements, gelenkt werden, um auf unterschiedliche, voneinander beabstandete Bereiche in dessen Bildebene fokussiert zu werden, an denen die Bilder des Wechselwirkungsbereichs erzeugt werden. Die Umlenkeinrichtung kann zu diesem Zweck beispielsweise mindestens ein Umlenkprisma aufweisen. Alternativ zur Verwendung eines Umlenkprismas kann die Umlenkeinrichtung auch reflektierend ausgebildet sein und beispielsweise mehrere Strahlumlenkbereiche in Form von Spiegelflächen aufweisen, welche die Beobachtungsstrahlung in unterschiedliche Richtungen umlenken, die einer jeweiligen Beobachtungsrichtung zugeordnet sind.

Alternativ oder zusätzlich kann die Abbildungsoptik zur Erzeugung von einem oder von mehreren Bildern auch eine Einrichtung aufweisen, welche die Strahlrichtung des Beobachtungsstrahlengangs zur Bildung eines Beobachtungsstrahls zwei Mal in entgegen gesetzter Weise beeinflusst, so dass sich insgesamt ein Strahlversatz ergibt, d.h. es handelt sich bei der Einrichtung um eine Strahlversatzeinrichtung. Die Strahlversatzeinrichtung kann insbesondere im fokussierten Beobachtungsstrahlengang der Abbildungsoptik, beispielsweise zwischen zwei ein Strahlteleskop bildenden optischen Elementen, angeordnet sein. Die Strahlversatzeinrichtung kann beispielsweise einen, zwei oder mehr Blöcke aus einem für die Beleuchtungsstrahlung transparenten Material, z.B. aus Quarzglas, aufweisen, die als planparallele Blöcke bzw. Platten ausgebildet sind, um einen Parallelversatz der auftreffenden Beobachtungsstrahlung herzustellen. Die Blöcke können zueinander verkippt angeordnet sein, um zu erreichen, dass die zwei oder mehr Beobachtungsstrahlen an unterschiedlichen Bereichen der Detektorfläche auftreffen, um zwei oder mehr lateral versetzte Bilder zu erzeugen.

Bei einer weiteren Ausführungsform ist die Steuerungseinrichtung ausgebildet, die Ausrichtung der Beobachtungsrichtung relativ zur Vorschubrichtung des Schneidprozesses konstant zu halten. Auf diese Weise kann eine bestimmte charakteristische Kenngröße, beispielsweise der Schneidfrontwinkel, während des Schneidprozesses auch in dem Fall zuverlässig ermittelt werden, dass sich die Vorschubrichtung während des Schneidprozesses ändert.

Bei einer Ausführungsform verläuft die Beobachtungsrichtung in einer Projektion in eine Ebene senkrecht zur Strahlachse entgegen einer Vorschubrichtung des Schneidprozesses. Bei einer solchen Beobachtung gegen die Schnittrichtung des Schneidprozesses, die auch als schleppende Beobachtung bezeichnet wird, wird die Schneidfront bei genügend kleinem Schneidfrontwinkel von der oberen Kante der Schneidfront verdeckt; die Schnittfuge erscheint dunkel. Wird die Schneidfrontsteigung flacher und der Schneidfrontwinkel größer, ist keine vollständige Verdeckung mehr gegeben; die Schnittfuge erscheint hell oder in Bereichen hell. Aus dem Helligkeitswert bzw. der gemessenen Gesamtintensität des bei der schleppenden Beobachtung aufgenommenen Bildes bzw. eines Teilbereichs dieses Bildes können daher Rückschlüsse auf den Schneidfrontwinkel als charakteristische Kenngröße des Schneidprozesses gezogen werden. Unter einer Ausrichtung entgegen der Vorschubrichtung des Schneidprozesses werden im Sinne dieser Anmeldung auch Beobachtungsrichtungen verstanden, die um weniger als ca. +/- 23° von der Ausrichtung entgegen der Vorschubrichtung abweichen, da auch bei solchen Winkel-Abweichungen der Schneidfrontwinkel noch ermittelt werden kann.

Bei einer Weiterbildung ist die Auswerteeinrichtung ausgebildet, anhand des erfassten Wechselwirkungsbereichs einen Schneidfrontwinkel der Schnittfuge und/oder eine Überschreitung und/oder eine Unterschreitung eines vorgegebenen Schneidfrontwinkels der Schnittfuge als charakteristische Kenngröße(n) des Schneidprozesses zu ermitteln. Wie weiter oben dargestellt wurde, nimmt die Länge der in dieser Beobachtungsrichtung sichtbaren Schneidfront bei flacher werdender Schneidfront zu, sodass anhand eines aus dem bei schleppender Beobachtung aufgenommenen Bildes bestimmten Intensitätswerts eine Messung bzw. Ermittlung der Schneidfrontsteigung bzw. des Schneidfrontwinkels möglich ist. Bei dem Intensitätswert kann es sich um die Gesamtintensität des aufgenommenen Bildes handeln, in der Regel wird aber zur Bestimmung des Intensitätswerts nur ein räumlich begrenzter Teilbereich des aufgenommenen Bildes im Bereich der Schneidfront ausgewertet, d.h. es wird die Gesamtintensität in dem räumlich begrenzten Teilbereich bestimmt. Insbesondere kann durch einen Vergleich dieses Intensitätswerts mit einem Intensitäts-Referenzwert, der beispielsweise der Gesamtintensität eines außerhalb der Schneidfront liegenden Teilbereichs des aufgenommenen Bildes entspricht, eine Überschreitung eines kritischen Werts für den Schneidfrontwinkel erfasst bzw. detektiert werden. Alternativ oder zusätzlich kann auch eine Unterschreitung eines kritischen Werts für den Schneidfrontwinkel erfasst bzw. detektiert werden, bspw. bei Unterschreiten eines der zuvor beschriebenen Intensitätswerte. Dadurch können bspw. Abbrand beim Laserschneiden mit Sauerstoffgas oder ungenaue Konturen beim Laserschmelzschneiden mit Inertgas, wie Stickstoff, durch Einbringen von zu viel Energie verhindert werden. Durch die Erfindung wird die Produktivität der Schneidmaschine gesteigert, indem die Vorschubgeschwindigkeit entsprechend erhöht wird.

Bei einer weiteren Weiterbildung ist die numerische Apertur der Abbildungsoptik so gewählt, dass der Winkel, unter dem die Beobachtungsrichtung zur Strahlachse des Hochenergiestrahls verläuft, um weniger als 5°, bevorzugt um weniger als 2° von dem vorgegebenen Schneidfrontwinkel abweicht. Es hat sich als günstig erwiesen, wenn der Beobachtungswinkel möglichst nahe an dem Schneidfrontwinkel liegt, bei dessen Überschreitung kein Gutschnitt mehr vorliegt, da in diesem Fall Schwankungen in der Gesamtintensität des aufgenommenen Bildes bzw. eines Teilbereichs des Bildes im Bereich der Schneidfront besonders stark sind bzw. ein Flackern des aufgenommenen Bildes zu beobachten ist. Ein solches Flackern ist auf kleine Änderungen des Schneidfrontwinkels um den Beobachtungswinkel herum zurückzuführen, da bei temporär etwas steileren Schneidfrontwinkeln das Prozessleuchten durch die Werkstückoberseite verdeckt wird, bei flacheren Schneidfrontwinkeln das Prozessleuchten aber vom Detektor erfasst werden kann. Wenn kaum eine Gefahr für einen Schnittabriss besteht, z.B. wegen hoher Laserleistung und niedriger Vorschubgeschwindigkeit, kann alternativ der Beobachtungswinkel so gewählt werden, dass durch das Flackern die Unterschreitung eines Schneidfrontwinkels vom Detektor erfasst wird.

Bei einer weiteren Ausführungsform ist die numerische Apertur der Abbildungsoptik so gewählt, dass der Winkel des Beobachtungsstrahls zur Strahlachse des Hochenergiestrahls zwischen ca. 5° und 15°, bevorzugt zwischen ca. 5° und 10° liegt. Wie weiter oben dargestellt wurde, sollte der Winkel, unter dem die Beobachtung erfolgt, im Wesentlichen mit dem gewünschten bzw. vorgegebenen Schneidfrontwinkel, bei dem noch ein Gutschnitt erfolgt, übereinstimmen. Schneidfrontwinkel, bei denen ein Gutschnitt erfolgt, können innerhalb des oben angegebenen Intervalls liegen. Abhängig vom Prozess bzw. von den Prozessparametern, z.B. von der Vorschubgeschwindigkeit sowie von dem verwendeten Werkstückmaterial, sowie abhängig von der Strahlgeometrie des Hochenergiestrahls kann der maximal mögliche Schneidfrontwinkel für einen Gutschnitt ggf. auch außerhalb dieses Wertebereichs liegen.

Die Beobachtung unter einem gewünschten (Beobachtungs-)Winkel des Beobachtungsstrahls zur Strahlachse des Hochleistungsstrahls kann durch das Fokussierelement hindurch erfolgen, sofern die erforderliche numerische Apertur (NA) gegeben ist. Die numerische Apertur NA berechnet sich direkt aus dem gewünschten Beobachtungswinkel zu NA= n x sin(β) mit n:= Brechzahl des umgebenden Mediums (i.d.R. Luft mit n=1); β := gewünschter (maximaler) Beobachtungswinkel. Die numerische Apertur der Bilderfassungseinrichtung bzw. der Abbildungsoptik wird so gewählt, dass diese eine Beobachtung unter dem gewünschten Winkel bzw. innerhalb eines gewünschten Winkelbereichs zur Strahlachse zulässt.

Bei einer weiteren Ausführungsform ist die Bilderfassungseinrichtung zur Bildung eines weiteren Beobachtungsstrahls zur Beobachtung des Wechselwirkungsbereichs aus einer weiteren Beobachtungsrichtung ausgebildet und die Abbildungsoptik ist zur Erzeugung eines weiteren Bildes des Wechselwirkungsbereichs aus der weiteren Beobachtungsrichtung ausgebildet. Die Erzeugung von zwei oder mehr Bildern des Wechselwirkungsbereichs aus zwei oder mehr Beobachtungsrichtungen kann sinnvoll sein, um unterschiedliche charakteristische Kenngrößen zu ermitteln, die sich nur aus einer jeweils unterschiedlichen Beobachtungsrichtung überhaupt bzw. gut erfassen lassen. Auch kann ein Vergleich zwischen zwei oder mehr der aus unterschiedlichen Beobachtungsrichtungen aufgenommenen Bilder vorgenommen werden, um ein- und dieselbe charakteristische Kenngröße mit größerer Präzision bestimmen zu können oder durch Verknüpfung bzw. Verrechnung der Bilddaten zusätzliche Informationen extrahieren zu können.

In einer weiteren Ausführungsform ist die Auswerteeinrichtung ausgebildet, einen aus dem weiteren Bild des Wechselwirkungsbereichs bestimmten Intensitätswert mit einem aus einem in einer Projektion in eine Ebene senkrecht zur Strahlachse des Hochenergiestahls entgegen der Vorschubrichtung aufgenommenen Bild des Wechselwirkungsbereichs bestimmten Intensitätswert zu vergleichen. In diesem Fall wird die Gesamtintensität des schleppend, d.h. entgegen der Vorschubrichtung, aufgenommenen Bildes oder eines Teilbereichs dieses Bildes, der insbesondere ein Bild der Schneidfront enthält, zur Ermittlung der Schneidfrontsteigung bzw. des Schneidfrontwinkels mit der Gesamtintensität eines weiteren Bildes bzw. eines Teilbereichs dieses Bildes verglichen, das zeitgleich aus einer anderen Beobachtungsrichtung aufgenommen wird.

Der aus dem weiteren Bild bestimmte Intensitätswert dient als Referenzwert und kann beispielsweise von dem aus dem entgegen der Schneid- bzw. Vorschubrichtung aufgenommenen Bild bestimmten Intensitätswert verglichen werden, wobei für den Vergleich entweder die Gesamtintensität des jeweiligen Bildes oder die Gesamtintensität von im jeweiligen Bild an gleicher Stelle positionierten Teilbereichen verwendet wird. Der Vergleich kann auf unterschiedliche Weise erflogen, z.B. indem die beiden Intensitätswerte voneinander subtrahiert werden. Die erhaltene Differenz kann mit einem Schwellwert der Gesamtintensität verglichen werden, um zu ermitteln, ob der Schneidfrontwinkel einen vorgegebenen Wert über- oder unterschreitet. An Stelle der Differenz kann auch eine andere von den beiden Intensitätswerten abhängige Größe, beispielsweise der Quotient, mit einem Schwellwert verglichen werden, um den Schneidfrontwinkel bzw. die Über- oder Unterschreitung eines vorgegebenen Schneidfrontwinkels zu ermitteln.

Die Beobachtungsrichtung, aus welcher das weitere Bild aufgenommen wird, kann beispielsweise in Vorschubrichtung ausgerichtet sein, d.h. es wird das schleppend aufgenommene Bild der Schneidfront mit einem stechend aufgenommenen Bild verglichen, wobei die Beobachtungsrichtungen in der Werkstückebene einen Winkel von 180° zueinander einschließen. Es kann aber auch eine koaxiale, entlang der Strahlachse des Hochenergiestrahls verlaufende Beobachtungsrichtung oder ggf. eine andere Beobachtungsrichtung als Referenz zur Bestimmung des Schneidfrontwinkels dienen. Eine koaxiale, entlang der Strahlachse des Hochenergiestrahls erfolgende Beobachtung kann zudem dazu genutzt werden, um eine höher aufgelöste Prozessbeobachtung des zu überwachenden Bereichs zu ermöglichen.

In einer weiteren Ausführungsform ist die Beobachtungsrichtung in einer Ebene senkrecht zur Strahlachse des Hochenergiestrahls nicht in oder entgegen der (momentanen) Vorschubrichtung des Schneidprozesses ausgerichtet und die Auswerteeinrichtung ist ausgebildet, anhand des aufgenommenen Bildes eine Gratbildung, Rauigkeit und/oder Riefenbildung als charakteristische Kenngröße(n) der Schnittfuge zu ermitteln. In diesem Fall wird/werden alternativ oder zusätzlich zur Ermittlung der Schneidfrontsteigung weitere charakteristische Kenngrößen der Schnittfuge bestimmt, beispielsweise eine Riefenbildung bzw. ein Riefenabstand in Schneid- bzw. Vorschubrichtung sowie eine Riefentiefe an den seitlichen Kanten der Schnittfuge, eine Gratbildung an der Unterseite des Werkstücks und/oder die Rauigkeit an den Schnittspaltflanken der Schnittfuge. Auch die Schneidfrontsteigung, genauer gesagt das Überschreiten eines vorgegebenen Schneidfrontwinkels, kann einen Indikator für einen Schnittabriss oder für eine Bart- bzw. Riefenbildung (als Vorstufe eines Schnittabrisses) bilden.

Zu diesem Zweck kann insbesondere eine Beobachtungsrichtung oder es können zwei in einem Winkel von ca. 180° zueinander ausgerichtete Beobachtungsrichtungen gewählt werden, die in der Projektion auf die Werkstückebene unter einem Winkel von ca. +/-90° (typischer Weise zwischen ca. +/-70° und +/-110°) zur Vorschubrichtung verlaufen, da aus solchen Beobachtungsrichtungen jeweils der Einfluss einer der beiden seitlichen Schnittkanten der Schnittfuge auf den Wechselwirkungsbereich besonders gut zu erkennen ist, was die Ermittlung der oben genannten charakteristische Kenngrößen erleichtert.

Bei einer weiteren Ausführungsform umfasst die Vorrichtung zusätzlich eine Beleuchtungsquelle zur Beleuchtung des Werkstücks in dem zu überwachenden Bereich. Die Beleuchtung kann insbesondere koaxial zur Strahlachse des Hochenergiestrahls erfolgen, um die Oberkante des Werkstücks bzw. der Schnittfuge sichtbar zu machen und auf diese Weise die Positions- und Richtungsbestimmung der Schnittfuge zu erleichtern. Die Beleuchtungsquelle kann beispielsweise eine Beleuchtung bei Wellenlängen zwischen 360nm und 800nm (VIS) oder ca. 800 nm und ca. 1000 nm (NIR) erzeugen. Die Beleuchtung kann koaxial zur Hochenergiestrahlung erfolgen, d.h. in Form einer Auflichtbeleuchtung. In diesem Fall kann der Beleuchtungsstrahl beispielsweise in nicht für die Beobachtung genutzten Winkelbereichen geometrisch eingekoppelt werden, beispielsweise in Form eines im kollimierten Strahlengang eingebrachten Spiegels oder Lochspiegels, der die Strahlengänge der Beleuchtung und Beobachtung örtlich zusammenführt. Alternativ kann die Beleuchtungsstrahlung über einen Strahlteiler eingekoppelt werden, der beispielsweise 50% der Beleuchtungsstrahlung reflektiert und 50% der Beobachtungsstrahlung transmittiert. Der Strahlteiler kann auch als Polarisationsstrahlteiler ausgeführt sein, so dass nur Strahlung, deren Polarisation bei Reflexion auf der Werkstück gedreht wird, in den Beobachtungsstrahlengang gelangt. Es ist aber auch möglich, die Beleuchtungsquelle nicht koaxial zur Strahlachse des Hochenergiestrahls auszurichten.

Die Beleuchtungsquelle kann beispielsweise als Diodenlaser, Leuchtdiode (LED) oder Blitzlichtlampe ausgeführt sein, wobei eine große Leistungsdichte in einem spektral engen Bereich für die Beleuchtung vorteilhaft ist. Um eine homogene Beleuchtung zu gewährleisten, kann eine Homogenisierung der Strahlung beispielsweise durch einen Glasstab oder eine Glasfaser vorteilhaft sein.

Bei einer weiteren Ausführungsform ist die Bilderfassungseinrichtung zur Aufnahme des Bildes durch eine Düsenöffnung einer Laserschneiddüse zum Durchtritt des Laserstrahls auf das Werkstück ausgebildet. In diesem Fall begrenzt der ringförmige Innenrand der Düsenöffnung der Laserschneiddüse den Beobachtungsbereich bzw. den mittels der Bilderfassungseinrichtung erfassbaren zu überwachenden Bereich. Durch die Laserschneiddüse hindurch kann ggf. auch eine koaxiale Beobachtung des zu überwachenden Bereichs erfolgen, um eine höher aufgelöste Prozessbeobachtung zu ermöglichen.

In einer weiteren Ausführungsform weist die Bilderfassungseinrichtung einen Detektor, insbesondere eine Kamera, mit einer Detektorfläche auf, an der das Bild erzeugt wird. Bei dem Detektor handelt es sich in der Regel um einen ortsauflösenden Detektor, beispielsweise um einem CCD-Sensor oder einen CMOS-Sensor, der auch als HDR (High Dynamic Range) Sensor ausgeführt sein kann. Für die Erfassung mehrerer Bilder kann ein- und dieselbe Detektorfläche der Kamera dienen, es können aber auch mehrere Detektoren bzw. Detektorflächen zur Erfassung der Bilder vorgesehen sein. Bei der von dem Wechselwirkungsbereich emittierten Strahlung, die zur Beobachtung genutzt wird, handelt es sich um Wärmestrahlung in einem Wellenlängenbereich, der vom Material des Werkstücks abhängt. Bei eisenhaltigen Werkstücken ist typischer Weise eine Beobachtung in einem Wellenlängenbereich zwischen ca. 800 nm und 1100 nm bzw. 1400 nm (NIR-Bereich) günstig. Im ersten Fall kann beispielsweise eine Si-basierte Kamera verwendet werden, im zweiten Fall eine InGaAs-basierte Kamera. Bei Nichteisenmetallen liegt die Schmelztemperatur niedriger, so dass ggf. Kameras, die für längere Wellenlängen z.B. im kurzwelligen Infrarot-Bereich (SWIR) zwischen ca. 1,4 µm und 3,0 µm (InGaAs) oder ggf. im fernen Infrarot-Bereich (FIR) zwischen ca. 15 µm und 1 mm empfindlich sind, für die Beobachtung notwendig bzw. günstig sein können. Grundsätzlich ist eine schmalbandige Beobachtung in einem Wellenlängenbereich von ca. 15 nm oder weniger vorteilhaft, um chromatische Aberrationen zu verhindern. Zur Erzeugung einer solchen schmalbandigen Beobachtung kann ein schmalbandiger wellenlängenselektiver Filter in der Bilderfassungseinrichtung vorgesehen werden.

Bei einer weiteren Ausführungsform umfasst die Vorrichtung zusätzlich eine Steuer- und/oder Regeleinrichtung zur Steuerung und/oder Regelung von Parametern des Schneidprozesses in Abhängigkeit von der mindestens einen ermittelten charakteristischen Kenngröße. Die Steuer- und/oder Regeleinrichtung dient typischer Weise zur Steuerung bzw. zur Regelung des gesamten Schneidprozesses, d.h. der für den Schneidprozess erforderlichen Bewegung des Hochenergiestrahls relativ zum Werkstück sowie von Schneidparametern wie z.B. Vorschub- bzw. Schneidgeschwindigkeit, Prozessgasdruck, Laserleistung, etc.

Diese und weitere Parameter können in Abhängigkeit von der bzw. von den ermittelten charakteristischen Kenngrößen gesteuert bzw. geregelt werden. Beispielsweise kann in Abhängigkeit vom ermittelten Schneidfrontwinkel die Vorschubgeschwindigkeit gesteuert bzw. geregelt reduziert werden, um einen Schnittabriss zu verhindern. Eine Reduzierung der Vorschubgeschwindigkeit kann beispielsweise vorgenommen werden, wenn der vorgegebene Schneidfrontwinkel, bei dem noch ein Gutschnitt erfolgt, überschritten wird.

Ein weiterer Aspekt der Erfindung betrifft eine Vorrichtung der eingangs genannten Art, bei der die Auswerteeinrichtung ausgebildet ist, anhand des erfassten Wechselwirkungsbereichs einen Schneidfrontwinkel der Schnittfuge und/oder eine Überschreitung eines vorgegebenen Schneidfrontwinkels und/oder eine Unterschreitung eines vorgegebenen Schneidfrontwinkels der Schnittfuge als charakteristische Kenngröße(n) des Schneidprozesses zu ermitteln. Die Vorrichtung umfasst zusätzlich eine Regeleinrichtung, die zur Regelung des Schneidfrontwinkels auf einen vorgegebenen, konstanten Wert durch Beeinflussen mindestens eines Stellparameters des Schneidprozesses ausgebildet bzw. programmiert ist. Der vorgegebene, konstante Wert des Schneidfrontwinkels stimmt typischer Weise mit dem vorgegebenen Schneidfrontwinkel überein, sofern dessen Über- oder Unterschreitung ermittelt wird.

Die Erfinder haben erkannt, dass es zur Regelung des Schneidprozesses mittels eines Hochenergiestrahls, insbesondere mittels eines Laserstrahls, günstig ist, die dreidimensionale Form der Schnittfront, insbesondere den Schneidfrontwinkel, als Regelgröße zu verwenden, d.h. die Schneidfrontsteigung bzw. den Schneidfrontwinkel auf einen vorgegebenen, konstanten Soll-Wert zu regeln. Zu diesem Zweck wird der Ist-Wert des Schneidfrontwinkels und/oder es wird die Überschreitung und/oder Unterschreitung des vorgegebenen Schneidfrontwinkels ermittelt, was auf die weiter oben beschriebene Weise erfolgen kann. Die momentane Form der Schneidfront bzw. der momentane Schneidfrontwinkel wird somit als Ist-Wert für die Regelung verwendet. Als Stellgröße wird typischer Weise die in das Werkstück eingebrachte Streckenenergie derart beeinflusst, dass sich für eine jeweilige Materialart und Materialdicke des Werkstücks eine konstante Sollgeometrie bzw. eine konstante Schneidfrontsteigung einstellt.

Es hat sich gezeigt, dass die Schneidfrontsteigung bzw. der Schneidfrontwinkel direkt mit der Schnittabrissgrenze korrelieren und sich bei einer an die jeweilige Strahlkaustik des Hochenergiestrahls angepassten Schneidfrontsteigung ein optimaler Bearbeitungspunkt einstellt, der kurz unterhalb der Schnittabrissgrenze gehalten werden kann. Unterschiedliche Chargen des gleichen Materials, die produktionsbedingt unterschiedliche Schneidneigungen und Schnittabrissgrenzen aufweisen, weisen jeweils kurz unterhalb der individuellen Schnittabrissgrenze die gleiche Schneidfrontsteigung bzw. die gleiche Form der Schneidfront auf.

Bei den Stellparametern des Schneidprozesses, die zur Regelung des Schneidfrontwinkels beeinflusst werden können, handelt es sich typischer Weise um Stellparameter, die die in das Werkstück eingebrachte Streckenenergie beeinflussen. Die Streckenenergie entspricht der durch den Hochenergiestrahl zugeführten Energie pro Längeneinheit (z.B. cm) entlang der Schnittfuge. Bei den Stellparametern kann es sich u.a. um die Vorschubgeschwindigkeit zwischen dem Hochenergiestrahl und dem Werkstück, um die Leistung des Hochenergiestrahls, um die Strahlkaustik bzw. die Fokuslage des Hochenergiestrahls sowie um die Gasmischung und die Gaszufuhr (d.h. beispielsweise den Volumenstrom) des beim Schneidprozess verwendeten Schneidgases handeln.

Bei einer Ausführungsform ist die Regeleinrichtung ausgebildet, den Stellparameter zur Regelung des Schneidfrontwinkels in Abhängigkeit von der zu schneidenden Kontur, insbesondere in Abhängigkeit von einem Krümmungsradius der zu schneidenden Kontur, auszuwählen. Es hat sich gezeigt, dass die Wahl des Stellparameters für die Regelung des Schneidfrontwinkels auf den konstanten Soll-Wert von der Geometrie der zu schneidenden Kontur, insbesondere von deren Krümmungsradius, abhängig ist, da bei entsprechend kleinem Krümmungsradius bzw. beim Schneiden einer vergleichsweise kleinen Kontur die Vorschubgeschwindigkeit durch die Dynamik der an der Bewegung beteiligten Achsen begrenzt wird. In diesem Fall ist es günstig, nicht die Vorschubgeschwindigkeit sondern einen anderen Stellparameter, beispielsweise die Leistung des Hochenergiestrahls, für die Regelung des Schneidprozesses zu verwenden. Die Vorschubgeschwindigkeit kann aber als Stellgröße verwendet werden, wenn die Leistung des Hochenergiestrahls ihren maximalen Wert erreicht, was typischer Weise beim Schneiden von längeren geraden Konturen (mit unendlich großem Krümmungsradius) der Fall ist.

Die Regeleinrichtung kann ausgebildet sein, als Stellparameter zur Regelung des Schneidfrontwinkels die Vorschubgeschwindigkeit zwischen dem Hochenergiestrahl und dem Werkstück zu beeinflussen, wenn die Vorschubgeschwindigkeit durch das Material und die Dicke des Werkstücks - und nicht durch die Geometrie einer an dem Werkstück zu schneidenden Kontur - auf einen maximalen Wert begrenzt ist. Die maximale Vorschubgeschwindigkeit wird typischer Weise beim Schneiden einer (langen) geraden Kontur erreicht, d.h. bei einer Schnittfuge, die entlang einer Geraden verläuft. Die maximale Vorschubgeschwindigkeit wird in diesem Fall nicht durch die Dynamik der an der Bewegung beteiligten Achsen begrenzt, sondern durch die Art und die Dicke des geschnittenen Werkstückmaterials, da beim Überschreiten der maximalen Vorschubgeschwindigkeit früher oder später ein Schnittabriss auftritt. Durch die Verwendung der Vorschubgeschwindigkeit als Stellgröße kann die Vorschubgeschwindigkeit derart angepasst werden, dass der gewünschte konstante Schneidfrontwinkel erreicht und ein Schnittabriss verhindert wird.

Die Regeleinrichtung kann ausgebildet sein, während der Beeinflussung der Vorschubgeschwindigkeit die Leistung des Hochenergiestrahls auf einem konstanten, insbesondere maximalen Wert zu halten. Die Produktivität des Schneidprozesses kann erhöht werden, wenn beim Schneiden von Konturen, bei denen die Dynamik der an der Bewegung beteiligten Achsen die Vorschubgeschwindigkeit nicht nach oben begrenzt, die Leistung des Hochenergiestrahls, beispielsweise des Laserstrahls, auf einem konstanten Wert gehalten wird. Bei dem konstanten Wert handelt es sich insbesondere um einen für die jeweilige Vorrichtung (z.B. Laserschneidmaschine) sowie für die jeweilige Art und die Dicke des Werkstückmaterials maximalen Wert, der für viele Materialien mit der maximal möglichen Leistung der Strahlquelle, z.B. einer Laserquelle, übereinstimmt, die den Hochenergiestrahl erzeugt. Auf diese Weise kann die in das Werkstück eingebrachte Streckenenergie maximiert werden.

Die Regeleinrichtung kann ausgebildet sein, als Stellparameter zur Regelung des Schneidfrontwinkels die Leistung des Hochenergiestrahls zu beeinflussen, wenn die Vorschubgeschwindigkeit zwischen dem Hochenergiestrahl und dem Werkstück durch die Geometrie einer an dem Werkstück zu schneidenden Kontur auf einen maximalen Wert begrenzt ist. Anders als bei der oben beschriebenen Ausführungsform wird in diesem Fall die maximale Vorschubgeschwindigkeit durch die Dynamik der an der Bewegung zwischen dem Hochenergiestrahl und dem Werkstück beteiligten Achsen begrenzt, die ein Nachfahren der zu schneidenden Kontur mit der gewünschten Genauigkeit ermöglichen müssen. In diesem Fall ist es günstig, als Stellgröße für die Regelung des Schneidfrontwinkels nicht die Vorschubgeschwindigkeit, sondern die Leistung des Hochenergiestrahls zu verwenden, da auf diese Weise die Prozessfähigkeit des Schneidprozesses erhöht werden kann.

Bevorzugt ist die Regeleinrichtung ausgebildet, während der Beeinflussung der Leistung des Hochenergiestrahls die Vorschubgeschwindigkeit auf dem für das Schneiden der Kontur maximal möglichen Wert zu halten, um den Schneidprozess mit der maximal möglichen Geschwindigkeit durchzuführen. Der maximal mögliche Wert der Vorschubgeschwindigkeit kann entlang der zu schneidenden Kontur variieren.

Die Regeleinrichtung kann ausgebildet sein, die Leistung des Hochenergiestrahls zu modulieren und als Stellparameter zur Regelung des Schneidfrontwinkels die Modulation der Leistung des Hochenergiestrahls zu beeinflussen. Der Hochenergiestrahl wird typischer Weise im so genannten "continuous wave" bzw. Dauerstrichbetrieb eingesetzt, bei dem die Leistung kontinuierlich erzeugt wird und die Amplitude der Leistung reduziert oder gesteigert wird. Insbesondere beim Schneiden von sehr kleinen Konturen (mit sehr kleinen Krümmungsradien) können die Schnittqualität und die Prozessfähigkeit optimiert werden, indem die Leistung moduliert wird, d.h. der Hochenergiestrahl nicht dauernd eingeschaltet ist. Beispielsweise kann die Leistung in diesem Fall gepulst erzeugt werden und die Leistungsmodulation kann als Stellgröße für die Regelung des Schneidfrontwinkels verwendet werden.

Die Auswerteeinrichtung kann ausgebildet sein, eine Überschreitung des vorgegebenen Schneidfrontwinkels der Schnittfuge zu ermitteln und die Regeleinrichtung kann zur Regelung des Schneidfrontwinkels einen unstetigen Regler, insbesondere eine Zweipunktregler oder einen Dreipunktregler, aufweisen. Wie weiter oben beschrieben wurde, kann die Auswerteeinrichtung ausgebildet sein, den Betrag des Schneidfrontwinkels nicht absolut zu messen, sondern lediglich ein Überschreiten oder ggf. ein Unterschreiten eines vorgegebenen Schneidfrontwinkels zu detektieren.

In diesem Fall ist für die Regelung ein unstetiger Regler, beispielsweise in Form eines Zweipunktreglers oder eines Dreipunktreglers, vorteilhaft. Insbesondere kann die Regelung bei der Zweipunktmessung bzw. bei einem Zweipunktregler auch dadurch umgesetzt werden, dass die Schneidfront um den Sollwert des Schneidfrontwinkels pendelt. Da der Schneidprozess dynamisch abläuft, ist der Schneidfrontwinkel niemals absolut konstant. Ein Pendeln um den vorgegebenen, konstanten Schneidfrontwinkel ist aber auf die weiter oben beschriebene Weise messbar. Auch die Pendelfrequenz kann ggf. bei der Regelung des Schneidfrontwinkels berücksichtigt werden. Auch laufen "Wellen" über die Schneidfront, deren Vorhandensein ein Kriterium für eine gut eingestellte Streckenenergie bzw. einen Gutschnitt bilden kann.

Die Auswerteeinrichtung kann auch ausgebildet sein, den Schneidfrontwinkel der Schnittfuge zu ermitteln, und die Regeleinrichtung kann zur Regelung des Schneidfrontwinkels einen stetigen (beispielsweise linearen) Regler, insbesondere einen PID-Regler, aufweisen. Wie weiter oben beschrieben wurde, ist es auch möglich, den Absolutwert des Schneidfrontwinkels zu ermitteln. In diesem Fall ist es günstig, wenn ein stetiger Regler, beispielsweise ein PID-Regler, für die Regelung verwendet wird. Auch die Umsetzung komplexerer Regelungskonzepte ist möglich.

Ein weiterer Aspekt der Erfindung betrifft auch ein Verfahren zur Überwachung, insbesondere zur Regelung, eines Schneidprozesses an einem Werkstück, umfassend: Fokussieren eines Hochenergiestrahls, insbesondere eines Laserstrahls, auf das Werkstück, Erfassen eines zu überwachenden Bereichs des Werkstücks, der einen Wechselwirkungsbereich des Hochenergiestrahls mit dem Werkstück umfasst, und Ermitteln mindestens einer charakteristischen Kenngröße (a) des Schneidprozesses, insbesondere einer bei dem Schneidprozess gebildeten Schnittfuge, anhand des erfassten Wechselwirkungsbereichs. Das Verfahren ist gekennzeichnet durch Bilden mithilfe einer Abbildungsoptik eines Beobachtungsstrahls zur Beobachtung des Wechselwirkungsbereichs aus einer unter einem Winkel zur Strahlachse des Hochenergiestrahls verlaufenden Beobachtungsrichtung, Erzeugen eines Bildes des Wechselwirkungsbereichs aus der unter dem Winkel zur Strahlachse des Hochenergiestrahls verlaufenden Beobachtungsrichtung, wobei der Beobachtungsstrahl exzentrisch zur zentralen Achse des Fokussierelements läuft und somit im konvergenten Strahlengang zwischen dem Fokussierelement und dem Werkstück unter dem Winkel zur Strahlachse des Hochenergiestrahls verläuft, sowie Verändern der Ausrichtung der Beobachtungsrichtung in einer Projektion in eine Ebene senkrecht zur Strahlachse in Abhängigkeit von einer Vorschubrichtung des Schneidprozesses. Das Verfahren ermöglicht es, die weiter oben im Zusammenhang mit der Vorrichtung beschriebenen Vorteile zu realisieren. Es versteht sich, dass auch die weiter oben im Zusammenhang mit der Vorrichtung beschriebenen Ausführungsformen als entsprechende Varianten des Verfahrens realisiert werden können.

Das weiter oben beschriebene Verfahren kann folgende weitere Schritte aufweisen: Ermitteln eines Schneidfrontwinkels der Schnittfuge und/oder einer Überschreitung und/oder einer Unterschreitung eines vorgegebenen Schneidfrontwinkels der Schnittfuge als charakteristische Kenngröße(n) des Schneidprozesses, sowie Regeln des Schneidfrontwinkels auf einen vorgegebenen, konstanten Wert durch Beeinflussen mindestens eines Stellparameters des Schneidprozesses.

Der Stellparameter zur Regelung des Schneidfrontwinkels kann in Abhängigkeit von einer zu schneidenden Kontur an dem Werkstück, insbesondere in Abhängigkeit von einem Krümmungsradius einer an dem Werkstück zu schneidenden Kontur, ausgewählt werden. Wie weiter oben beschrieben wurde, ist es zur Optimierung der Prozessfähigkeit bzw. der Produktivität günstig, in Abhängigkeit von der zu schneidenden Kontur einen geeigneten Stellparameter auszuwählen.

Als Stellparameter zur Regelung des Schneidfrontwinkels kann die Vorschubgeschwindigkeit zwischen dem Hochenergiestrahl und dem Werkstück beeinflusst werden, wenn die Vorschubgeschwindigkeit durch das Material und die Dicke des Werkstücks auf einen maximalen Wert begrenzt wird. In diesem Fall ist es günstig, wenn während der Beeinflussung der Vorschubgeschwindigkeit die Leistung des Hochenergiestrahls auf einem konstanten, insbesondere maximalen Wert gehalten wird, der insbesondere mit der maximal erzeugbaren Leistung einer Strahlungsquelle übereinstimmen kann, die den Hochenergiestrahl erzeugt.

Als Stellparameter zur Regelung des Schneidfrontwinkels kann die Leistung des Hochenergiestrahls beeinflusst werden, wenn die Vorschubgeschwindigkeit zwischen dem Hochenergiestrahl und dem Werkstück durch die Geometrie einer an dem Werkstück zu schneidenden Kontur auf einen maximalen Wert begrenzt wird. In diesem Fall ist es günstig, wenn während der Beeinflussung der Leistung des Hochenergiestrahls die Vorschubgeschwindigkeit auf dem maximalen Wert gehalten wird.

Insbesondere beim Schneiden von Konturen mit sehr kleinen Krümmungsradien kann die Leistung des Hochenergiestrahls moduliert und als Stellparameter zur Regelung des Schneidfrontwinkels die Modulation der Leistung des Hochenergiestrahls beeinflusst werden.

Der vorgegebene, konstante Wert, auf den der Schneidfrontwinkel geregelt wird, kann zwischen 2° und 6°, bevorzugt zwischen 3° und 5° liegen. Diese Werte für den Soll-Wert des Schneidfrontwinkels haben sich bei den meisten zu schneidenden Materialien als günstig herausgestellt, wobei Materialdicken zwischen ca. 3 mm und ca. 25 mm verwendet wurden. Das hier beschriebene Verfahren zur Regelung des Schneidprozesses kann sowohl für Brennschneidprozesse als auch für Schmelzschneidprozesse eingesetzt werden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung eines Ausführungsbeispiels einer Vorrichtung zur Überwachung und Regelung eines Laserschneidprozesses an einem Werkstück,
- Fig. 1b: eine Darstellung einer Blende zur Bildung eines Beobachtungsstrahls in einer solchen Vorrichtung entlang einer Schnittline B-B von Fig. 1a,
- Fig. 2a-d: vier Darstellungen von Wärmebildern eines Wechselwirkungsbereichs zwischen Laserstrahl und Werkstück aus vier unterschiedlichen, zueinander senkrechten Beobachtungsrichtungen,
- Fig. 3: eine Darstellung analog Fig. 1a mit einer Rasteranordnung zur Erzeugung von Bildern des Wechselwirkungsbereichs aus unterschiedlichen Beobachtungsrichtungen,
- Fig. 3a: eine Darstellung einer an dem Werkstück geschnittenen kreisförmigen Kontur,
- Fig. 4a-c: Detaildarstellungen der Rasteranordnung von Fig. 3,
- Fig. 5a,b: Darstellungen einer Abbildungsoptik für die Vorrichtung von Fig. 1a mit einem Umlenkprisma zur Erzeugung von Bildern des Wechselwirkungsbereichs aus unterschiedlichen Beobachtungsrichtungen,
- Fig. 6a-d: Darstellungen eines Schneidfrontwinkels an einer bei dem Laserschneidprozess gebildeten Schnittfuge bei unterschiedlichen Vorschubgeschwindigkeiten, und
- Fig. 7: eine Darstellung einer Regelung des Schneidfrontwinkels auf einen konstanten Soll-Wert unter Verwendung einer Zweipunktregelung.

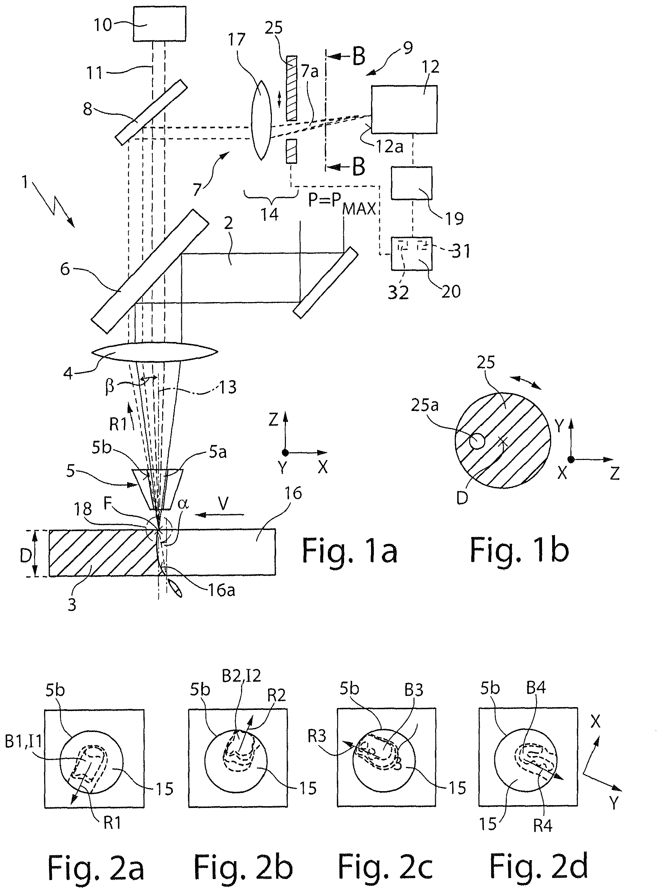

**Fig. 1a** zeigt einen beispielhaften Aufbau einer Vorrichtung 1 zur Überwachung und Regelung eines Laserschneidprozesses an einem Werkstück 3 mittels eines Laserstrahls 2, welche in Form eines Laserbearbeitungskopfs ausgebildet ist, der Teil einer nicht näher dargestellten Laserbearbeitungsmaschine ist. Der Laserstrahl 2 wird im gezeigten Beispiel von einem CO₂-Laser erzeugt. Alternativ kann der Laserstrahl 2 beispielsweise durch einen Festkörperlaser erzeugt werden. Der Laserstrahl 2 wird für die Durchführung einer schneidenden Bearbeitung an dem Werkstück 3 mittels eines Fokussierelements in Form einer Fokussierlinse 4 auf das Werkstück 3 fokussiert. Bei der Fokussierlinse 4 handelt es sich im gezeigten Beispiel um eine Linse aus Zinkselenid, die den Laserstrahl 2 durch eine Laserbearbeitungsdüse 5, genauer gesagt durch deren Düsenöffnung 5a, auf das Werkstück 3 fokussiert, und zwar im gezeigten Beispiel auf eine Fokusposition F an der Oberseite des Werkstücks 3. Der Laserstrahl 2 bildet dort einen Wechselwirkungsbereich 18 mit dem Werkstück 3, hinter dem entgegen einer Vorschubrichtung v bzw. Schnittrichtung des Laserschneidprozesses eine Schnittfuge 16 erzeugt wird. Im Falle eines Laserstrahls 2 aus einem Festkörperlaser kann eine Fokussierlinse bspw. aus Quarzglas eingesetzt werden.

In Fig. 1a ebenfalls zu erkennen ist ein teildurchlässig ausgebildeter Umlenkspiegel 6, welcher den einfallenden Laserstrahl 2 (bspw. mit einer Wellenlänge von ca. 10,6 µm) reflektiert und für eine Prozessüberwachung relevante Beobachtungsstrahlung zu einem weiteren teildurchlässigen Umlenkspiegel 8 transmittiert. Der Umlenkspiegel 6 ist für Beobachtungsstrahlung in Form von Wärmestrahlung bei Wellenlängen von ca. 800 nm bis 1100 nm, ggf. über 1100 nm, teildurchlässig ausgebildet. Der weitere teildurchlässige Umlenkspiegel 8 reflektiert die Beobachtungsstrahlung zu einer Bilderfassungseinrichtung 9. Eine Beleuchtungsquelle 10 dient zur koaxialen Beleuchtung des Werkstücks 3 mit Beleuchtungsstrahlung 11. Die Beleuchtungsstrahlung 11 wird von dem weiteren teiltransmissiven Umlenkspiegel 8 sowie von dem Umlenkspiegel 6 transmittiert und durch die Düsenöffnung 5a der Laserbearbeitungsdüse 5 hindurch auf das Werkstück 3 gelenkt.

Alternativ zu den teildurchlässigen Umlenkspiegeln 6, 8 können auch Scraperspiegel oder Lochspiegel, welche einfallende Strahlung nur aus einem Randbereich reflektieren, eingesetzt werden, um die Beobachtungsstrahlung 7 der Bilderfassungseinrichtung 9 zuzuführen bzw. um die Beleuchtungsstrahlung 11 dem Werkstück 3 zuzuführen. Auch mindestens ein seitlich in den Strahlengang des Laserstrahls 2 eingebrachter Spiegel kann verwendet werden, um die Beobachtung zu ermöglichen.

Als Beleuchtungsquelle 10 können Diodenlaser oder LEDs oder Blitzlampen vorgesehen werden, die wie in Fig. 1a gezeigt koaxial, aber auch off-axis zur Laserstrahlachse 13 angeordnet werden können. Die Beleuchtungsquelle 10 kann beispielsweise auch außerhalb (insbesondere neben) der Vorrichtung 1 angeordnet und auf das Werkstück 3 gerichtet sein; alternativ kann die Beleuchtungsquelle 10 innerhalb der Vorrichtung 1 angeordnet sein, jedoch nicht koaxial zum Laserstrahl 2 auf das Werkstück 3 ausgerichtet sein. Gegebenenfalls kann die Vorrichtung 1 auch ohne eine Beleuchtungsquelle 10 betrieben werden.

Teil der Bilderfassungseinrichtung 9 ist eine im Beobachtungsstrahlengang 7 hinter dem weiteren teildurchlässigen Umlenkspiegel 8 angeordnete geometrisch hochauflösende Kamera 12. Bei der Kamera 12 kann es sich um eine Hochgeschwindigkeitskamera handeln, die koaxial zur Laserstrahlachse 13 bzw. zur Verlängerung der Laserstrahlachse 13 und somit richtungsunabhängig angeordnet ist. Beim dargestellten Beispiel erfolgt die Aufnahme von Bildern durch die Kamera 12 im Auflichtverfahren im NIR/IR-Wellenlängenbereich, um das Prozesseigenleuchten bzw. ein Wärmebild des Schneidprozesses aufzunehmen. Bei dem in Fig. 1a gezeigten Beispiel kann ein Filter vor der Kamera 12 angeordnet werden, wenn weitere Strahlungs- bzw. Wellenlängenanteile von der Erfassung mit der Kamera 12 ausgeschlossen werden sollen. Der Filter kann z.B. als schmalbandiger Bandpassfilter mit einer Halbwertsbreite von beispielsweise ca. 15 nm ausgebildet sein.

Zur Erzeugung von Bildern B1 bis B4 eines in **Fig. 2a****-d** gezeigten zu überwachenden Bereichs 15 des Werkstück 3, welcher den Wechselwirkungsbereich 18 enthält, auf einer Detektorfläche 12a der Kamera 12 weist die Bilderfassungseinrichtung 9 eine Abbildungsoptik 14 auf. Im gezeigten Beispiel weist die Abbildungsoptik 14 eine Blende 25 auf, die um eine zentrale Drehachse D drehbar gelagert ist, so dass sich bei der Drehung die Position einer exzentrisch angeordneten Blendenöffnung 25a auf einem Kreisbogen um die Drehachse D bewegt.

Durch die Anordnung der Blende 25 in dem mittels einer Linse 17 fokussierten Strahlengangs der Abbildungsoptik 14 tritt nur ein Teil des Beobachtungsstrahlengangs 7, welcher einen Randbereich der Fokussierlinse 4 durchläuft und im konvergenten Strahlengang nach der Fokussierlinse 4 unter einem Winkel β zur Strahlachse 13 des Laserstrahls 2 ausgerichtet ist, durch die exzentrisch zur Verlängerung der Strahlachse 13 des Laserstrahls 2 angeordnete Blendenöffnung 25a hindurch und bildet einen Beobachtungsstrahl 7a, welcher auf der Detektoroberfläche 12a abgebildet wird. Bei dem in Fig. 1a gezeigten Beispiel verläuft eine Beobachtungsrichtung R1 des Beobachtungsstrahls 7a in der Projektion in die XY-Ebene bzw. die Werkstückebene entgegen der Vorschubrichtung v, entlang derer der Laserstrahl 2 und das Werkstück 3 in der XY-Ebene relativ zueinander bewegt werden, um die gewünschte Schnittkontur zu bilden.

Es versteht sich, dass an Stelle einer mechanisch verstellbaren Blende 25 auch eine elektrisch verstellbare Blende, beispielsweise in Form eines LCD-Arrays, verwendet werden kann, bei der einzelne Pixel oder Pixelgruppen elektronisch an- bzw. ausgeschaltet werden, um die Blendenwirkung zu erzeugen. Auch kann die mechanische Blende 25 anders als in Fig. 1a,b gezeigt quer zum Beobachtungsstrahlengang 7, beispielsweise in der YZ-Ebene, bewegt bzw. verschoben werden, um unterschiedliche Teile des Beobachtungsstrahlengangs 7 abzuschatten bzw. für die Beobachtung zu öffnen. Die Blende 25 kann auch in Form eines oder mehrerer auf- und zuklappbarer mechanischer Elemente realisiert werden.

Wie in Fig. 2a-d zu erkennen ist, wird ein jeweils von der Abbildungsoptik 14 aufgenommenes Bild des zu überwachenden Bereichs 15 des Werkstücks 3 von einer kreisförmigen Innenkontur 5b der Laserschneiddüse 5 begrenzt. Der durch die Innenkontur 5b der Laserschneiddüse 5 begrenzte zu überwachende Bereich 15 enthält ein Bild B1 bis B4 des Wechselwirkungsbereichs 18, das bei den in Fig. 2a-d gezeigten Darstellungen aus unterschiedlich orientierten Beobachtungsrichtungen R1 bis R4 aufgenommen wurde.

Fig. 2a zeigt ein Bild B1 des Wechselwirkungsbereichs 18, welches aus der in Fig. 1a gezeigten Beobachtungsrichtung R1 aufgenommen wurde. Die Projektion der Beobachtungsrichtung R1 in die XY-Ebene ist in Fig. 2a durch einen Pfeil dargestellt. Wie weiter oben beschrieben wurde, verläuft die Beobachtungsrichtung R1 bei dem in Fig. 1a gezeigten Beispiel entgegen der Vorschubrichtung v, d.h. in negativer X-Richtung, was als schleppende Beobachtung in Bezug auf eine Schneidfront 16a an dem Werkstück 3 bezeichnet wird, hinter der sich die Schnittfuge 16 ausbildet. Ein Schneidfrontwinkel α der Schneidfront 16a ist definiert als derjenige Winkel, den eine Verbindungslinie zwischen der Oberkante der Schneidfront 16a an der Oberseite des Werkstücks 3 und der Unterkante der Schneidfront 16a an der Unterseite des Werkstücks 3 mit der Strahlachse 13 des Laserstrahls 2 bzw. mit der Dickenrichtung des plattenförmigen Werkstücks 3 einschließt.

Bei der schleppenden Beobachtung existiert ein Schneidfrontwinkel a, bei dessen Unterschreitung die Schneidfront 16a und damit auch die von dieser ausgehende Wärmestrahlung von der Kante der Schneidfront 16a an der Oberseite des Werkstücks 3 vollständig verdeckt wird, so dass die Schnittfuge 16 bzw. das dem Wechselwirkungsbereich 18 zugeordnete Bild B1 dunkel erscheint. Wird die Steigung der Schneidfront 16a flacher und der Schneidfrontwinkel α größer, ist keine vollständige Verdeckung der Schneidfront 16a durch deren obere Kante mehr gegeben, so dass die Länge der unter schleppender Beobachtung sichtbaren Schneidfront 16a größer wird und die Schnittfuge 16 in Bereichen hell bzw. insgesamt hell erscheint.

Aus einem Helligkeits- bzw. Intensitätswert I1, der aus dem bei der schleppenden Beobachtung aufgenommenen Bild B1 des Wechselwirkungsbereichs 18 bestimmt wird, können Rückschlüsse auf den Schneidfrontwinkel α als charakteristische Kenngröße des Schneidprozesses gezogen werden. Als Intensitätswert I1 kann die gemessene Gesamtintensität des Bildes B1 dienen, der Intensitätswert I1 kann aber auch anhand eines räumlich begrenzten Bereichs des Bildes B1 bestimmt werden, der beispielsweise die Schneidfront 16a enthält. Auch in letzterem Fall wird der Intensitätswert I1 bestimmt, indem die Gesamtintensität in dem räumlich begrenzten Bereich bzw. Bildausschnitt ermittelt wird.

Nimmt der anhand des aufgenommenen Bildes B1 bestimmte Intensitätswert I1 zu, nimmt typischer Weise auch der Schneidfrontwinkel α zu. Anhand einer Zuordnung von Messwerten des Intensitätswerts I1 zu Schneidfrontwinkeln a, die beispielsweise in vorausgehenden Testmessungen ermittelt wurde, lässt sich mittels einer Auswerteeinrichtung 19 aus dem unter schleppender Beobachtung bestimmten Intensitätswert I1 der Schneidfrontwinkel α bestimmen. Zur Erhöhung der Genauigkeit kann es günstig sein, den anhand eines räumlich begrenzten Teilbereichs bzw. Bildausschnitts bestimmten Intensitätswert I1 mit einem weiteren Intensitätswert I2 in Beziehung zu setzen, der anhand eines weiteren räumlich begrenzten Teilbereichs bzw. Bildausschnitts des aufgenommenen Bildes B1 bestimmt wird, der nicht die Schneidfront 16a enthält.

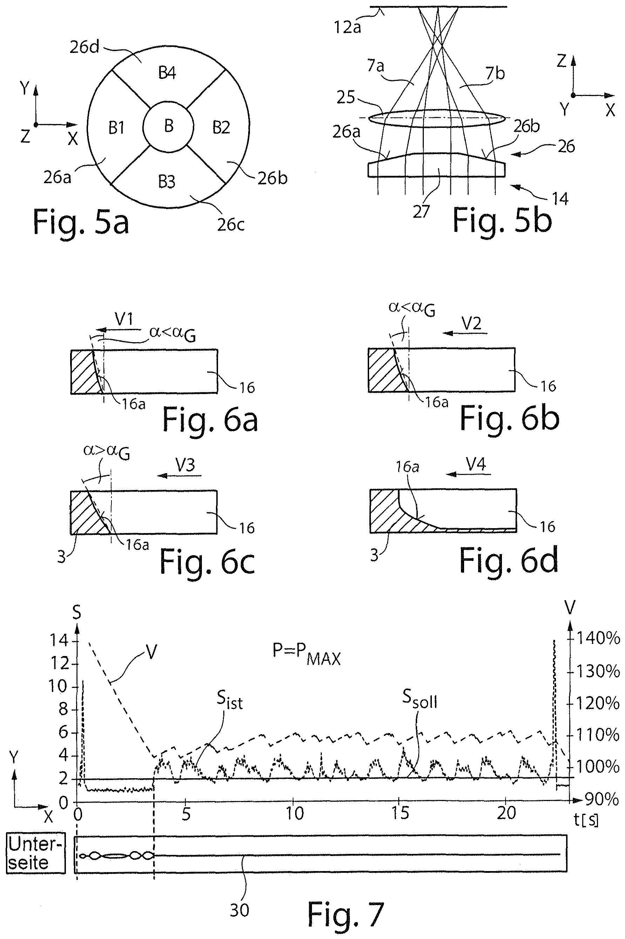

In der Regel ist es für die Steuerung bzw. Regelung des Schneidprozesses jedoch nicht erforderlich, den genauen Wert des Schneidfrontwinkels α zu kennen. Vielmehr kann es ausreichend sein, durch einen Vergleich des Intensitätswerts I1 bzw. einer aus dem Intensitätswert I1 und dem weiteren Intensitätswert I2 gebildeten Größe mit einem Schwellwert I_{S}, bei welchem vom Vorliegen eines Gutschnitts ausgegangen werden kann, auf eine Überschreitung eines kritischen Werts des Schneidfrontwinkels α_{G} zu schließen, bei dem kein Gutschnitt mehr vorliegt (vgl. die Beschreibung weiter unten im Zusammenhang mit Fig. 6a-d).

Es hat sich für die schleppende Beobachtung als günstig erwiesen, wenn der Winkel β der Beobachtungsrichtung R1 zur Strahlachse 13 des Laserstrahls 2 im Wesentlichen mit dem vorgegebenen Schneidfrontwinkel α_{G} übereinstimmt, bei dem noch ein Gutschnitt vorliegt. Insbesondere ist es günstig, wenn die Abweichung bei weniger als 5°, insbesondere bei weniger als 2° liegt. Der Wertebereich, in dem die Abweichung liegt, hängt u.a. von dem Winkelbereich ab, unter dem beobachtet wird (z.B. der Größe der außermittigen Blendenöffnung 25a), so dass die Abweichung ggf. auch größer ausfallen kann.

Für einen vorgegebenen Schneidfrontwinkel α_{G} von 8° sollte der Winkel β der Beobachtungsrichtung R1 zur Strahlachse 13 zwischen 3° und 13°, bevorzugt zwischen 6° und 10° liegen. Geeignete Winkel β der Beobachtungsrichtung R1 zur Strahlachse 13 des Laserstrahls 2 liegen typsicher Weise zwischen ca. 5° und ca. 15°, insbesondere zwischen 5° und 10°, wobei der genaue Wert von der Dicke des Werkstücks 3 sowie vom verwendeten Werkstückmaterial abhängig ist. Der Winkel β der Beobachtungsrichtung R1 zur Strahlachse 13 des Laserstrahls 2, unter dem das Bild B1 aufgenommen wird, ist durch den Abstand zwischen der zentrischen Drehachse D und der Blendenöffnung 25a der Blende 25 vorgegeben. Der Abstand und damit der Winkel β der Beobachtungsrichtung R1 zur Strahlachse 13 des Laserstrahls 2 kann ggf. durch eine Verschiebung der Blende 25 in der YZ-Ebene eingestellt bzw. verändert werden. Für die Beobachtung unter großen Winkeln β von z.B. 6° bzw. 10° oder mehr kann erforderlichenfalls die Fokussierlinse 4 im Durchmesser vergrößert werden oder es kann eine Beobachtung von außerhalb der Fokussierlinse 4 erfolgen, d.h. der Beobachtungsstrahlengang 7 verläuft nicht oder nur teilweise durch die Fokussierlinse 4 hindurch. Auch eine Beobachtung unter kleineren Winkeln β (in der Regel mindestens 2°) ist möglich.

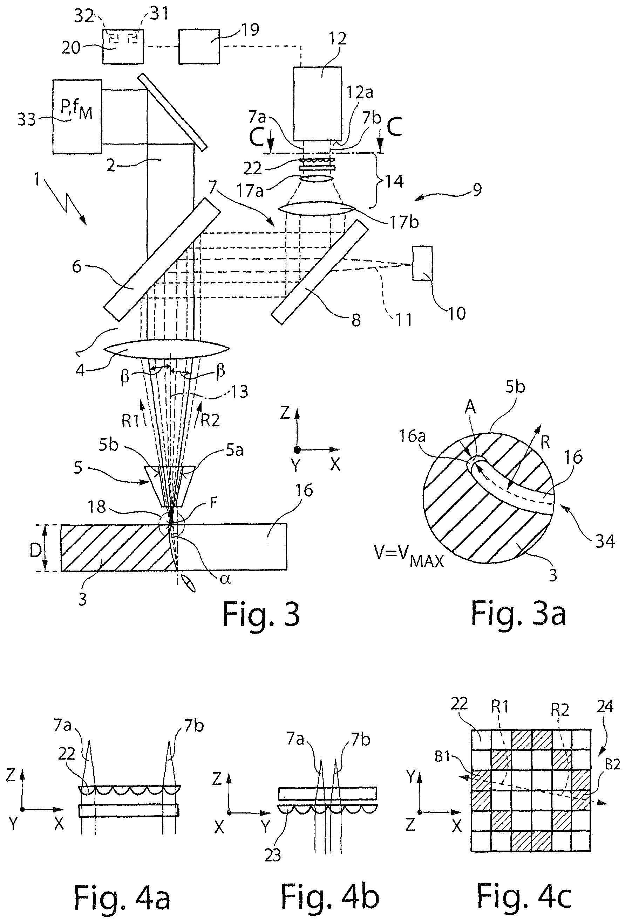

Die Genauigkeit bei der Ermittlung des Schneidfrontwinkels α kann gesteigert werden, wenn dieser in Relation zu einem Intensitätswert I2 eines weiteren Bildes B2 des Wechselwirkungsbereichs 18 gesetzt wird, das aus einer weiteren Beobachtungsrichtung R2 aufgenommen wird. Bei dem in Fig. 2b gezeigten Beispiel ist die weitere Beobachtungsrichtung R2 in der XY-Ebene zur (ersten) Beobachtungsrichtung R1 unter einem Winkel von 180° orientiert, d.h. die weitere Beobachtungsrichtung R2 verläuft (in der Projektion in der XY-Ebene) in Vorschubrichtung (positive X-Richtung), was auch als stechende Beobachtung bezeichnet wird. Um einen Vergleich zwischen den Intensitätswerten I1, I2 zu vereinfachen, die aus den beiden unterschiedlichen Beobachtungsrichtungen R1, R2 aufgenommen wurden, ist der Winkel β, den die beiden Beobachtungsrichtungen R1, R2 zur Strahlachse 13 aufweisen, identisch (vgl. hierzu auch Fig. 3), es können aber ggf. für die unterschiedlichen Beobachtungsrichtungen auch unterschiedliche Winkel gewählt werden.

Der aus dem unter stechender Beobachtung aufgenommenen Bild B2 von Fig. 2b bestimmte Intensitätswert I2 dient als Referenzwert und kann beispielsweise von dem Intensitätswert I1 des unter schleppender Beobachtung aufgenommenen Bildes B1, welches in Fig. 2a gezeigt ist, subtrahiert werden. Die so erhaltene Differenz oder ggf. ein aus den Intensitätswerten I1, I2 gebildeter Quotient I1 / I2 kann in der Auswerteeinrichtung 19 mit dem Schwellwert bzw. Referenzwert I_{ref} verglichen werden, um festzustellen, ob der Schneidfrontwinkel α einen vorgegebenen Schneidfrontwinkel α_{R} überschreitet, bei dem noch ein Gutschnitt vorliegt. Für den Vergleich werden typischer Weise Intensitätswerte I1, I2 verwendet, welche der Gesamtintensität der beiden Bilder B1, B2 bzw. an gleicher Stelle positionierter Teilbereiche der beiden Bilder B1, B2 entsprechen.

Zusätzlich oder alternativ zur den in Fig. 2a,b gezeigten Beobachtungsrichtungen R1, R2, die in bzw. entgegen der Vorschubrichtung v verlaufen, ist es auch möglich, eine Beobachtung des Wechselwirkungsbereichs 18 aus Beobachtungsrichtungen vorzunehmen, die nicht in der Zeichenebene (XZ-Ebene) von Fig. 1a liegen, welche entlang der Mittenebene der Schnittfuge 16 verläuft. Mögliche Beobachtungsrichtungen stellen alle Richtungen dar, die (bei gegebenem Winkel β) vom Fokuspunkt F ausgehend auf einer kegelförmigen Fläche liegen. Da die Ausrichtung bzw. die Orientierung der exzentrischen Blendenöffnung 25a die Beobachtungsrichtung festlegt, kann die Auswahl einer geeigneten Beobachtungsrichtung durch eine Drehung der Blende 25 erfolgen.

Zwei Bilder B3, B4 des Wechselwirkungsbereichs 18, die aus einer dritten Beobachtungsrichtung R3 unter -90° zur X-Richtung (d.h. in negativer Y-Richtung) bzw. aus einer vierten Beobachtungsrichtung R4 unter +90° zur X-Richtung (d.h. in positiver Y-Richtung) aufgenommen wurden, sind in Fig. 2c,d dargestellt. Mit Hilfe der aus diesen beiden Beobachtungsrichtungen R3, R4 aufgenommenen Bilder B3, B4 können die beiden (in Fig. 1a nicht gezeigten) seitlichen Ränder der Schnittfuge 16 genauer beobachtet werden.

Die Auswerteeinrichtung 19 kann anhand der aufgenommenen Bilder B3, B4, die in der XY-Ebene unter einem Winkel von +/-90° zur Vorschubrichtung v verlaufen, eine Gratbildung, Rauigkeit und/oder Riefenbildung als charakteristische Kenngröße(n) der Schnittfuge 16 ermitteln. Beispielsweise kann anhand des Bildes B3, welches aus der dritten Beobachtungsrichtung R3 aufgenommen wurde, ein Riefenbildung bzw. ein Riefenabstand in Schneid- bzw. Vorschubrichtung v sowie eine Riefentiefe an derjenigen seitlichen Kante der Schnittfuge 16 ermittelt werden, welche in Fig. 1a vor der Zeichenebene angeordnet ist.

Entsprechend kann auch anhand des vierten Bildes B4, welches aus der vierten Beobachtungsrichtung R4 aufgenommen wurde, eine Riefenbildung bzw. ein Riefenabstand sowie eine Riefentiefe an derjenigen seitlichen Kante der Schnittfuge 16 ermittelt werden, welche sich hinter der Zeichenebene von Fig. 1a befindet. Die Riefen können beispielsweise in Form von periodisch wiederkehrenden Strukturen (typischer Weise in Form von Aus- bzw. Einbuchtungen) am Rand des Bildes B3, B4 des Wechselwirkungsbereichs 18 erkennbar sein und anhand des Abstandes zwischen den Strukturen kann ein Riefenabstand sowie anhand der Amplitude der Strukturen auf die Riefentiefe geschlossen werden.

Anhand der dritten und vierten Bilder B3, B4 kann die Auswerteeinrichtung 19 auch eine Gratbildung an der Unterseite des Werkstücks 3 und/oder die Rauigkeit an den beiden Schnittspaltflanken bzw. -kanten der Schnittfuge 16 ermitteln. Bei der Gratbildung verläuft die untere Kante der Schnittfuge 16 nicht mehr als horizontale Linie, so dass eine geometrische Abweichung in dem jeweiligen Bild B3, B4 entsteht, die von der Auswerteeinrichtung 19 detektiert werden kann. Es versteht sich, dass für die oben genannten Zwecke die dritte und vierte Beobachtungsrichtung R3, R4 nicht zwingend unter einem rechten Winkel zur Vorschubrichtung v verlaufen müssen. Vielmehr kann ggf. auch eine Beobachtung unter Winkeln erfolgen, die in der XY-Ebene beispielsweise zwischen ca. +70° und +110° (bzw. -70° und -110°) zur Vorschubrichtung verlaufen.

Um eine bestimmte charakteristische Kenngröße, beispielsweise den Schneidfrontwinkel a, auch bei einer Änderung der Vorschubrichtung v während des Schneidens entlang von gekrümmten Schnittkonturen unter einer gewünschten Beobachtungsrichtung, beispielsweise der Beobachtungsrichtung R1 entgegen der Vorschubrichtung v, beobachten zu können, ist es erforderlich, die Ausrichtung der Beobachtungsrichtung R1 in der XY-Ebene in Abhängigkeit von der Vorschubrichtung v bzw. von der Orientierung der Vorschubrichtung v in der XY-Ebene zu verändern. Zu diesem Zweck kann eine Steuer- und Regeleinrichtung 20 dienen, welche die Blende 25 und damit die Blendenöffnung 25a bei der Änderung der Vorschubrichtung v entsprechend um die Drehachse D mitdreht, so dass die Beobachtungsrichtung R1 stets entgegen der Vorschubrichtung v ausgerichtet bleibt. Durch das Mitdrehen der Blende 25 kann auch die Ausrichtung jeder der weiteren in Fig. 2b-d gezeigten Beobachtungsrichtungen R2 bis R4 relativ zur Vorschubrichtung v konstant gehalten werden.

Da die Steuer- und Regeleinrichtung 20 den Schneidprozess steuert, verfügt diese über die notwendigen Informationen hinsichtlich der momentanen Vorschubrichtung v und kann die Bilderfassungseinrichtung 9, genauer gesagt die Blende 25, geeignet ansteuern. Gegebenenfalls kann die Blende 25 auch mehr als eine Blendenöffnung 25a aufweisen, um eine gleichzeitige Beobachtung des Wechselwirkungsbereichs 18 aus unterschiedlichen Beobachtungsrichtungen R1 bis R4 zu ermöglichen. In diesem Fall sollte die Abbildungsoptik 14 so ausgelegt werden, dass die den unterschiedlichen Beobachtungsrichtungen R1 bis R4 zugeordneten Bilder B1 bis B4 an unterschiedlichen Teilbereichen der Detektorfläche 12a erzeugt werden.

Eine weitere Möglichkeit zur gleichzeitigen Erzeugung mehrerer Bilder aus unterschiedlichen Beobachtungsrichtungen R1, R2,... wird nachfolgend anhand einer in **Fig. 3** gezeigten Vorrichtung 1 erläutert. Im Gegensatz zu der in Fig. 1a gezeigten Vorrichtung 1, bei welcher der Beobachtungsstrahl 7a durch eine nicht zentrische Apertur (Blendenöffnung 25a) im Beobachtungsstrahlengang 7 erzeugt wird und die Abbildung des Beobachtungsstrahlengangs 7 mittels einer einzigen Abbildungslinse 17 zentrisch zur Strahlachse 13 des Laserstrahls 2 erfolgt, weist die in Fig. 3 gezeigte Vorrichtung 1 eine Abbildungsoptik 14 mit einer Mehrzahl von optischen Elementen in Form von Linsenelementen 22, 23 auf, die zur Erzeugung einer Mehrzahl von Bildern auf der Detektorfläche 12a des Detektors 12 dienen, die jeweils aus unterschiedlichen Beobachtungsrichtungen R1, R2, ... aufgenommen werden.

Bei der in **Fig. 4a****-c** dargestellten Detail der Abbildungsoptik 14 weist diese eine Mehrzahl von sechs ersten Zylinderlinsen 22 und von sechs zweiten Zylinderlinsen 23 auf, die in einer Rasteranordnung 24 (Linsenarray) angeordnet sind, um eine Anzahl von 6 x 6 = 36 Bildern auf der Detektorfläche 12a zu erzeugen. Die Abbildungsoptik 14 weist zudem in dem in Fig. 3 gezeigten Beispiel zwei Linsen 17a, 17b in einer Teleskopanordnung auf, um eine Anpassung des Strahlquerschnitts des Beobachtungsstrahlengangs an die Detektorfläche 12a der Kamera 12 zu ermöglichen. Alternativ kann die Abbildung der unterschiedlichen Beobachtungsrichtungen auch nach dem plenoptischen Prinzip bzw. mittels einer Lichtfeld-Kamera erfolgen. Typischer Weise ist es nicht sinnvoll, alle 36 Bilder parallel auszuwerten. Vielmehr wird die Auswertung typischer Weise auf diejenigen Bilder beschränkt, die sich zur Ermittlung einer bestimmten charakteristischen Kenngröße besonders gut eignen.

Die Steuerungseinrichtung 20 steuert in diesem Fall in Abhängigkeit von der momentanen Vorschubrichtung v die Auswerteeinrichtung 19 derart an, dass eine Auswertung nur derjenigen Bilder erfolgt, die aus Beobachtungsrichtungen mit einer für die Ermittlung einer jeweils charakteristischen Kenngröße vorteilhaften Ausrichtung aufgenommen werden, wie weiter unten näher beschrieben wird. Soll zusätzlich auch der Beobachtungs-Winkel β verändert werden, ist es erforderlich, den radialen Abstand der von der Auswerteeinrichtung 19 ausgewerteten Bilder zum Zentrum der Rasteranordnung 24 geeignet zu wählen bzw. zu verändern.

Bei der in Fig. 4a-c gezeigten Rasteranordnung 24 können beispielsweise zwei Bilder B1, B2 für die Ermittlung des Schneidfrontwinkels α herangezogen werden, die zwei Beobachtungsstrahlen 7a, 7b bzw. zwei Beobachtungsrichtungen R1, R2 zugeordnet sind, die im Wesentlichen in Vorschubrichtung v bzw. entgegen der Vorschubrichtung v ausgerichtet sind, welche der negativen bzw. der positiven X-Richtung entspricht. Wie in Fig. 4c zu erkennen ist, weichen aufgrund des Fehlens von Bildpositionen auf der Kamera 12, die in Y-Richtung spiegelsymmetrisch zur X-Achse verlaufen, die Beobachtungsrichtungen R1, R2, entlang derer die beiden Bilder B1, B2 aufgenommen werden, um ca. 5° von der X-Richtung ab. Eine solche Ausrichtung der Beobachtungsrichtungen R1, R2 ist zwar nicht ideal, ermöglicht aber ebenfalls eine schleppende bzw. stechende Beobachtung und ist daher im Regelfall ausreichend, um den Schneidfrontwinkel α mit ausreichender Genauigkeit zu ermitteln.

Es versteht sich, dass in Abhängigkeit von der gewünschten Auflösung auch weniger oder mehr Zylinderlinsen in der Rasteranordnung 24 vorgesehen werden können und dass an Stelle von gekreuzten Zylinderlinsen 22, 23 auch sphärische oder ggf. asphärische Linsen zur Bildung der Rasteranordnung 24 verwendet werden können. Im einfachsten Fall können vier abbildende optische Elemente die Rasteranordnung 24 bilden. Es versteht sich, dass auch ein einzelnes, exzentrisch zur Verlängerung der Strahlachse 13 des Laserstrahls 2 angeordnetes optisches Element ausreichend ist, um ein Bild des Wechselwirkungsbereichs 18 aus einer Beobachtungsrichtung aufzunehmen, die unter einem Winkel β zur Strahlachse 13 des Laserstrahls 2 verläuft. Gegebenenfalls kann die Rasteranordnung 24 auf einen ringförmigen Bereich beschränkt werden, d.h. auf die Rasterelemente im Zentrum der Rasteranordnung 24 kann verzichtet werden, da diese lediglich zur Erzeugung von Bildern genutzt werden können, die einen sehr kleinen Winkel zur Strahlachse 13 des Laserstrahls 2 aufweisen. Gegebenenfalls kann in dem zentralen Bereich der Rasteranordnung 24 eine vergleichsweise große Linse zentrisch angeordnet werden, um eine koaxiale Beobachtung des Wechselwirkungsbereichs 18 mit hoher Auflösung zu ermöglichen.

Eine alternative Ausgestaltung der Abbildungsoptik 14 mit einer Abbildungslinse 25 und einer Einrichtung zur Beeinflussung der Strahlrichtung des Beobachtungsstrahlengangs 7 in Form einer als Umlenkprisma 26 ausgebildeten Strahl-Umlenkeinrichtung ist in **Fig. 5a****,b** dargestellt. Das Umlenkprisma 26 weist vier keilförmige Abschnitte mit planen, zur Beobachtungstrahlung bzw. zu deren Strahlachse unter einem Winkel angeordneten Flächen 26a-d auf, die um einen zentralen, planen Bereich 27 herum angeordnet sind. Die ersten beiden Flächen 26a,b dienen als Strahlumlenkbereiche zur Umlenkung der einfallenden Beobachtungsstrahlung in X-Richtung, so dass diese nicht senkrecht zur Mittelebene der Abbildungslinse 25 auf diese auftrifft, wodurch ein erster und zweiter Beobachtungsstrahl 7a, 7b gebildet werden, um ein erstes und zweites Bild B1, B2 auf der Detektorfläche 12a zu erzeugen, die entlang der X-Achse voneinander beabstandet sind.

Die dritte Fläche 26c und die vierte Fläche 26d dienen entsprechend als Strahlumlenkbereiche zur Erzeugung eines dritten und vierten Bildes B3, B4 auf der Detektorfläche 12a, die entlang der Y-Richtung voneinander beabstandet sind. Der zentrale, die Beobachtungsstrahlung nicht umlenkende Bereich 27 dient der Erzeugung eines zentrisch im Beobachtungsstrahlengang 7 angeordneten Bildes B auf der Detektorfläche 12a, welches zur Prozessbeobachtung verwendet werden kann. Bei dem in Fig. 5a,b gezeigten Ausführungsbeispiel ergibt sich insgesamt eine annäherungsweise konvexe Geometrie des Umlenkprismas 26. Es versteht sich, dass auch ein Umlenkprisma mit einer Wesentlichen konkaven Geometrie verwendet werden kann, um die Mehrzahl von Bildern B1 bis B4, ... zu erzeugen.

Die in Fig. 5a,b beispielhaft gezeigte Umlenkanordnung 26 unter Verwendung von vier Flächen 26a-c, die um den zentralen, planen Bereich 27 angeordnet sind und die eine Unterteilung des Winkelbereichs des Beobachtungsstrahlengangs 7 von 360° in vier Segmente mit jeweils 90° erzeugt, ist typischer Weise zu grob, um die Ermittlung des Schneidfrontwinkels α mit ausreichender Genauigkeit durchführen zu können, da die Bedingung, dass die jeweils ausgewählte Beobachtungsrichtung bzw. der jeweils ausgewählte Beobachtungsstrahl 7a, 7b eine Beobachtung entgegen der Vorschubrichtung v des Schneidprozesses ermöglicht, in der Regel nicht erfüllt ist. In der Regel ist zur Ermittlung des Schneidfrontwinkels α mit ausreichender Genauigkeit eine Unterteilung des gesamten zur Verfügung stehenden Winkelbereichs von 360° in mindestens acht bzw. in mindestens sechzehn Winkel-Segmente erforderlich.

Wie weiter oben beschrieben wurde, kann die Steuer- und Regeleinrichtung 20 auch dazu dienen, in Abhängigkeit vom Wert der ermittelten charakteristischen Kenngröße in den Schneidprozess einzugreifen und bestimmte Schneidparameter anzupassen bzw. zu verändern. Anhand von **Fig. 6a****-d** wird nachfolgend der Einfluss des Schneidfrontwinkels α auf die Schnittqualität bzw. auf das Schneidergebnis näher erläutert. Fig. 6a zeigt einen Schnitt bzw. eine Schnittfuge 16, bei welcher der Schneidfrontwinkel α der Schneidfront 16a bei ca. 3° liegt, Fig. 6b zeigt eine Schneidfront 16a mit einem Schneidfrontwinkel α von ca. 4,9°. Beide Schneidfrontwinkel α liegen unterhalb eines vorgegebenen Schneidfrontwinkels α_{G} = 5°, bei dem gerade noch ein Gutschnitt vorliegt. Fig. 6c zeigt eine Schneidfront 16a mit einem Schneidfrontwinkel α von ca. 10°, d.h. der vorgegebene Schneidfrontwinkel α_{G} = 5° ist deutlich überschritten, was zu einer Bartbildung an der Schnittfuge 16 führt. Fig. 6d zeigt schließlich eine Schneidfront 16a, welche bei einem Schnittabriss vorliegt, bei dem der untere Rand des Werkstücks 3 nicht mehr durchtrennt wird. Es versteht sich, dass bei dem in Fig. 6d gezeigten Schnittabriss keine sinnvolle Bestimmung des Schneidfrontwinkels α mehr möglich ist.

Um den in Fig. 6d dargestellten Schnittabriss zu verhindern, stellt die Steuer- und Regeleinrichtung 20 in Abhängigkeit vom momentan von der Auswerteeinrichtung 19 ermittelten Schneidfrontwinkel α die Vorschubgeschwindigkeit v des Schneidprozesses auf einen geeigneten Wert ein. Dem vorgegebenen Schneidfrontwinkel α_{G} ist hierbei eine Vorschubgeschwindigkeit v zugeordnet, die - willkürlich - als 100% festgelegt wird, d.h. es handelt sich um die maximale Vorschubgeschwindigkeit, bei der in der Regel noch ein Gutschnitt möglich ist. Die in Fig. 6a-d dargestellten Vorschubgeschwindigkeiten v1 bis v4 entsprechen 50% (Fig. 6a), ca. 100% (Fig. 6b), 110% (Fig. 6c) sowie 120% oder mehr (Fig. 6d) dieser maximalen Vorschubgeschwindigkeit vₘₐₓ.

Bei der maximalen Vorschubgeschwindigkeit vₘₐₓ handelt es sich um einen Richtwert, der einer bestimmten Bearbeitungsaufgabe zugeordnet ist. Anhand des Schneidfrontwinkels α kann die Vorschubgeschwindigkeit v geeignet eingestellt bzw. geregelt werden, um zu erreichen, das der Schneidfrontwinkel α unterhalb des vorgegebenen Schneidfrontwinkels α_{G} bleibt. Die Vorschubgeschwindigkeit v kann erforderlichenfalls insbesondere auch auf einen Wert unterhalb der maximalen Vorschubgeschwindigkeit vₘₐₓ reduziert werden, um ein Überschreiten des vorgegebenen (maximalen) Schneidfrontwinkels α_{G} zu verhindern.

Die Steuer- und Regeleinrichtung 20 kann auch dazu dienen, weitere Parameter des Schneidprozesses, beispielsweise die Laserleistung, den Gasfluss etc. in Abhängigkeit vom ermittelten Schneidfrontwinkel α oder von weiteren Kenngrößen des Schneidprozesses, beispielsweise der Gratbildung, Rauigkeit und/oder Riefenbildung an der Schnittfuge 16 zu steuern bzw. zu regeln.

Zusammenfassend können auf die oben beschriebene Weise der Schneidfrontwinkel α und/oder weitere charakteristische Kenngrößen des Schneidprozesses ermittelt werden. Insbesondere kann der Schneidfrontwinkel α auch in dem Fall ermittelt werden, dass sich die Schneidfrontunterkante außerhalb des Sichtbereichs 15 befindet, der von der Düsenöffnung 5a der Laserschneiddüse 5 begrenzt wird. Zudem kann die Ermittlung des Schneidfrontwinkels zuverlässig im Sinne einer einfachen Bildverarbeitung ausgeführt werden und die für die Ermittlung von charakteristischen Kenngrößen erforderlichen Bauteile können in den Bearbeitungskopf integriert werden, welcher die Vorrichtung 1 bildet.

Mit Hilfe der weiter oben beschriebenen Vorrichtung 1 oder mit Hilfe einer anderen geeigneten Vorrichtung, welche die Ermittlung einer Überschreitung und/oder Unterschreitung eines vorgegebenen Schneidfrontwinkels α_{G} oder die direkte (absolute) Ermittlung des Schneidfrontwinkels α ermöglicht, kann eine Regelung des Schneidfrontwinkels α auf einen konstanten Soll-Wert α_{G} erfolgen, der im hier beschriebenen Beispiel mit demjenigen Schneidfrontwinkel α_{G} übereinstimmt, dessen Überschreitung und/oder Unterschreitung von der Auswerteeinrichtung 19 ermittelt wird. Zu Regelung des Schneidfrontwinkels α auf den Soll-Wert α_{G} beeinflusst die Regeleinrichtung 20 mindestens einen Stellparameter als Stellgröße für die Regelung, wie nachfolgend anhand von **Fig. 7** am Beispiel einer geradlinigen Kontur 30 erläutert wird, die an einem Werkstück 3 geschnitten wird.

Über dem in Fig. 7 unten dargestellten Werkstück 3 ist ein Geschwindigkeitsprofil der Vorschubgeschwindigkeit v in Abhängigkeit von der Zeit t gezeigt. Die Skalierung der Zeitachse ist so gewählt, dass ein jeweiliger Zeitpunkt mit dem unmittelbar darunter dargestellten Ort des Werkstücks 3 entlang der X-Achse übereinstimmt. Die Vorschubgeschwindigkeit v ist zu Beginn des Schneidprozesses sehr groß, d.h. die Vorschubgeschwindigkeit v liegt mit ca. 140 % deutlich über der maximalen Vorschubgeschwindigkeit v_{MAX}, die wie oben dargestellt wurde einen Richtwert für eine bestimmte Bearbeitungsaufgabe darstellt, die durch die Dicke D des Werkstücks 3 und das Material bzw. den Materialtyp des Werkstücks 3 charakterisiert wird.

Aufgrund der zu Beginn zu großen Vorschubgeschwindigkeit v wird ein Sollwert S_{Soll} der Steigung S der Schneidfront 16a unterschritten, der im gezeigten Beispiel mit einem Soll-Wert α_{G} für den Schneidfrontwinkel α übereinstimmt, der bei α_{G} = 4° liegt. Typische Soll-Werte α_{G} für den Schneidfrontwinkel α liegen zwischen ca. 2° und ca. 6°, insbesondere zwischen ca. 3° und ca. 5°. Aufgrund der Überschreitung des Soll-Werts α_{G} des Schneidfrontwinkels α (bzw. der Unterschreitung des Sollwerts S_{Soll} der Schneidfrontsteigung S) kommt es zu einem Schnittabriss, d.h. das Werkstück 3 wird von dem Laserstrahl 2 nicht vollständig durchgeschnitten, wie anhand der in Fig. 7 gezeigten Unterseite des Werkstücks 3 gut zu erkennen ist.

Die Überschreitung des Soll-Werts α_{G} des Schneidfrontwinkels α wird von der Auswerteeinrichtung 19 auf die weiter oben beschriebene Weise erkannt. Um die momentane Steigung S_{Ist} der Schneidfront 16a auf dem Soll-Wert S_{Soll} zu halten (und somit auch den Ist-Wert des Schneidfrontwinkels α auf dem Soll-Wert α_{G} zu halten), weist die Regeleinrichtung 20 einen unstetigen Regler, im gezeigten Beispiel einen Zweipunktregler 31, auf (vgl. Fig. 1a und Fig. 3). Der Zweipunktregler 31 erhöht oder verringert die Vorschubgeschwindigkeit v je nachdem, ob der Ist-Wert S_{Ist} der Steigung der Schneidfront 16a über dem Soll-Wert S_{Soll} oder unter dem Soll-Wert S_{Soll} liegt. Entsprechend wird die Vorschubgeschwindigkeit v erhöht oder verringert, je nachdem, ob der Ist-Wert der Schneidfrontsteigung α unter oder über dem Soll-Wert α_{G} liegt. An Stelle des Zweipunktreglers 31 können auch andere unstetige Regler, beispielsweise Dreipunktregler oder dergleichen, in die Regeleinrichtung 20 integriert sein, um die Regelung des Schneidfrontwinkels α auf den Soll-Wert α_{Soll} vorzunehmen.

Während der im Zusammenhang mit Fig. 7 beschriebenen Regelung der Vorschubgeschwindigkeit v wird die Leistung P des Laserstrahls 2 auf einem konstanten, maximalen Wert P_{MAX} gehalten (vgl. Fig. 1a), der für die jeweilige Bearbeitungsaufgabe, d.h. Material des Werkstücks 3 und Dicke D des Werkstücks 3 sowie die verwendete Laserquelle einen Richtwert darstellt. Bei üblichen Materialien wie z.B. Stählen wird in der Regel die maximal mögliche Leistung P_{MAX} der Laserquelle gewählt. Die maximale Leistung P_{MAX} wird typischer Weise erreicht, wenn es sich bei der zu schneidenden Kontur wie in Fig. 7 gezeigt ist um eine vergleichsweise lange, geradlinige Kontur 30 (mit Krümmungsradius unendlich) handelt.

Es hat sich als günstig herausgestellt, abhängig von der zu schneidenden Kontur an dem Werkstück 3 unterschiedliche Stellparameter für die Regelung des Schneidfrontwinkels α zu verwenden. Beispielsweise kann die Vorschubgeschwindigkeit v als Stellgröße verwendet werden, wenn die Leistung des Hochenergiestrahls ihren maximalen Wert P_{MAX} erreicht, was typischer Weise beim Schneiden von längeren geraden Konturen (mit unendlich großem Krümmungsradius) der Fall ist (s.o.).

Handelt es sich bei der zu schneidenden Kontur um eine vergleichsweise kleine Kontur 34, wie sie in **Fig. 3a** dargestellt ist und welche einen Krümmungsradius R aufweist, der so klein ist, dass die maximale Vorschubgeschwindigkeit v_{MAX} durch die Dynamik der an der Bewegung zwischen dem Laserstrahl 2 und dem Werkstück 3 beteiligten Bewegungsachsen mit Ihrer maximalen Achsbeschleunigung in der Größenordnung von zirka 1 g begrenzt wird. Zum Schneiden einer kleinen Kontur 34 kann insbesondere eine oder es können ggf. mehrere Zusatzachse(n) verwendet werden, d.h. redundante, hoch dynamische Achsen mit einem kleinen Bewegungs- bzw. Verfahrbereich. Bei dem in Fig. 3a gezeigten Beispiel wird die Leistung P der Laserquelle 33 der Vorrichtung 1 als Stellgröße für die Regelung des Schneidfrontwinkels α verwendet. Die Regelung kann hierbei analog zu dem in Zusammenhang mit Fig. 7 beschriebenen Beispiel erfolgen. Die Vorschubgeschwindigkeit v wird hierbei typischer Weise auf dem maximal möglichen Wert v_{MAX} gehalten, der abhängig von der Bewegung entlang der zu schneidenden Kontur 34, insbesondere in Abhängigkeit vom ggf. nicht konstanten Krümmungsradius R, variieren kann.

Beim Schneiden von sehr kleinen Konturen 34 ist es ggf. günstig, an Stelle eines Dauerstrichbetriebs die Leistung P des von der Laserquelle 33 erzeugten Laserstrahls 2 zu modulieren. Insbesondere kann in diesem Fall die Laserquelle 33 in einen Pulsbetrieb umgeschaltet werden. In diesem Fall kann die Modulations- bzw. Pulsfrequenz f_{M} des Laserstrahls 2 als Stellparameter für die Regelung des Schneidfrontwinkels α verwendet werden. Alternativ oder zusätzlich kann ggf. die Pulsdauer der Pulse des von der Laserquelle 33 erzeugten, gepulsten Laserstrahls 2 als Stellparameter für die Regelung des Schneidfrontwinkels α verwendet werden.

An Stelle der weiter oben in Zusammenhang mit Fig. 7 beschriebenen Ermittlung der Überschreitung eines vorgegebenen Schneidfrontwinkels α_{G} kann auch der Absolutwert des Schneidfrontwinkels α bestimmt werden. Dies kann beispielsweise auf die in der eingangs zitierten WO 2012/107331 A1 beschriebene Weise erfolgen, d.h. indem in dem in Fig. 3a gezeigten, durch die kreisförmige Innenkontur 5b begrenzten Bild der Oberfläche des Werkstücks 3 der Abstand A zwischen der Schneidfrontoberkante und der Schneidfrontunterkante der Schneidfront 16a entlang der in Fig. 3a gestrichelt dargestellten Spaltmitte gemessen wird. Der Schneidfrontwinkel α ergibt sich aus dem gemessenen Abstand A und der Dicke D des Werkstücks 3 gemäß der Formel α = artan (A / D).

Ist der Absolutwert des Schneidfrontwinkels α bekannt, hat es sich als günstig erwiesen, in der Regeleinrichtung 20 an Stelle eines unstetigen Reglers 31 einen stetigen Regler 32, beispielsweise einen PID-Regler, zu verwenden. Es versteht sich, dass die Vorrichtung 1 sowohl zur Ermittlung des Absolutwerts des Schneidfrontwinkels α als auch zur Ermittlung der Überschreitung des vorgegebenen Schneidfrontwinkels α_{G} ausgebildet sein kann. Die Wahl der Ermittlungsmethode bzw. der Regelungsmethode kann beispielsweise davon abhängen, ob die Schneidfront 16a bei dem Schneidprozess gut zu erkennen ist oder ob diese ggf. durch das Prozesseigenleuchten nur schwer zu identifizieren ist, so dass der Abstand A nicht genau genug bestimmt werden kann.

Zusammenfassend kann durch die hier beschriebene Regelung des Schneidfrontwinkels α auf einen konstanten Soll-Wert α_{G} die Produktivität und die Prozessfähigkeit des Schneidprozesses optimiert werden. Insbesondere kann auf diese Weise ggf. ein "autarker" Schneidprozess realisiert werden, bei dem die Vorrichtung 1 den optimalen Arbeitspunkt für unterschiedliche Materialien bzw. zu schneidende Konturen selbst einstellt.

## Patentansprüche

1. Vorrichtung (1) zur Überwachung, insbesondere zur Regelung, eines Schneidprozesses an einem Werkstück (3), umfassend:
ein Fokussierelement (4) zur Fokussierung eines Hochenergiestrahls (2), insbesondere eines Laserstrahls, auf das Werkstück (3),
eine Bilderfassungseinrichtung (9) zur Erfassung eines zu überwachenden Bereichs (15) an dem Werkstück (3), der einen Wechselwirkungsbereich (18) des Hochenergiestrahls (2) mit dem Werkstück (3) umfasst, sowie eine Auswerteeinrichtung (19), die ausgebildet ist, anhand des erfassten Wechselwirkungsbereichs (18) mindestens eine charakteristische Kenngröße (α) des Schneidprozesses, insbesondere einer bei dem Schneidprozess gebildeten Schnittfuge (16), zu ermitteln, wobei
die Bilderfassungseinrichtung (9) zur Bildung eines Beobachtungsstrahls (7a) zur Beobachtung des Wechselwirkungsbereichs (18) aus einer unter einem Winkel (β) zur Strahlachse (13) des Hochenergiestrahls (3) verlaufenden Beobachtungsrichtung (R1) ausgebildet ist, und
wobei die Bilderfassungseinrichtung (9) eine Abbildungsoptik (14) zur Erzeugung eines Bildes (B1) des Wechselwirkungsbereichs (18) aus der unter dem Winkel (β) zur Strahlachse (13) des Hochenergiestrahls (3) verlaufenden Beobachtungsrichtung (R1) sowie einen Detektor (12), insbesondere eine Kamera, mit einer Detektorfläche (12a) umfasst, an der das Bild (B1) erzeugt wird,
wobei die Abbildungsoptik (14) ausgebildet ist, den exzentrisch zur zentralen Achse des Fokussierelements (4) laufenden und somit im konvergenten Strahlengang zwischen dem Fokussierelement (4) und dem Werkstück (3) unter dem Winkel (β) zur Strahlachse (13) des Hochenergiestrahls (3) verlaufenden Beobachtungsstrahl (7a) auf die Detektorfläche (12a) abzubilden, **dadurch gekennzeichnet,**
**dass** die Vorrichtung (1) eine Steuereinrichtung (20) umfasst, die ausgebildet ist, die Ausrichtung der Beobachtungsrichtung (R1, R2, ...) in einer Projektion in eine Ebene (X, Y) senkrecht zur Strahlachse (13) in Abhängigkeit von einer Vorschubrichtung (v) des Schneidprozesses zu verändern.

2. Vorrichtung nach Anspruch 1, bei welcher die Bilderfassungseinrichtung (9) ausgebildet ist, die Ausrichtung der Beobachtungsrichtung (R1) des Beobachtungsstrahls (7a) in einer Ebene (X, Y) senkrecht zur Strahlachse (13) des Hochenergiestrahls (2) zu verändern.

3. Vorrichtung nach Anspruch 1 oder 2, bei welcher die Abbildungsoptik (14) zur Erzeugung einer Mehrzahl von Bildern (B1 bis B4) des Wechselwirkungsbereichs (18) aus unterschiedlich ausgerichteten Beobachtungsrichtungen (R1 bis R4) ausgebildet ist.

4. Vorrichtung nach Anspruch 2 oder 3, bei welcher die Bilderfassungseinrichtung (9) zur Veränderung der Ausrichtung der Beobachtungsrichtung (R1) des Beobachtungsstrahls (7a) eine Blende (25) aufweist.

5. Vorrichtung nach Anspruch 3, bei welcher die Abbildungsoptik (14) zur Erzeugung der Mehrzahl von Bildern (B1 bis B4) eine Mehrzahl von abbildenden optischen Elementen (22, 23) aufweist.

6. Vorrichtung nach Anspruch 5, bei welcher die Mehrzahl von abbildenden optischen Elementen (22, 23) eine Rasteranordnung (24) bildet.

7. Vorrichtung nach Anspruch 3, bei welcher die Abbildungsoptik (14) zur Erzeugung der Mehrzahl von Bildern (B1 bis B4) eine Einrichtung (27) zur Bildung eines jeweiligen Beobachtungsstrahls (7a, 7b) durch Beeinflussen einer Strahlrichtung eines Beobachtungsstrahlengangs (7) aufweist.

8. Vorrichtung nach einem der vorhergehenden Ansprüche, bei welcher die Steuereinrichtung (20) ausgebildet ist, die Ausrichtung der Beobachtungsrichtung (R1) relativ zur Vorschubrichtung (v) konstant zu halten.

9. Vorrichtung nach einem der vorhergehenden Ansprüche, bei welcher die Beobachtungsrichtung (R1) in einer Ebene (X, Y) senkrecht zur Strahlachse (13) des Hochenergiestrahls (2) entgegen einer Vorschubrichtung (v) des Schneidprozesses verläuft.

10. Vorrichtung nach Anspruch 9, bei der die Auswerteeinrichtung (19) ausgebildet ist, anhand des erfassten Wechselwirkungsbereichs (18) einen Schneidfrontwinkel (α) der Schnittfuge (16) und/oder eine Überschreitung und/oder eine Unterschreitung eines vorgegebenen Schneidfrontwinkels (α_{G}) der Schnittfuge (16) als charakteristische Kenngröße(n) des Schneidprozesses zu ermitteln.

11. Vorrichtung nach Anspruch 10, bei welcher die numerische Apertur der Abbildungsoptik (14) so gewählt ist, dass der Winkel (β), unter dem die Beobachtungsrichtung (R1) zur Strahlachse (13) des Hochenergiestrahls (3) verläuft, um weniger als 5°, bevorzugt um weniger als 2° von dem vorgegebenen Schneidfrontwinkel (α_{G}) abweicht.

12. Vorrichtung nach einem der vorhergehenden Ansprüche, bei welcher die numerische Apertur der Abbildungsoptik (14) so gewählt ist, dass der Winkel (β) der Beobachtungsrichtung (R1) zur Strahlachse (13) des Hochenergiestrahls (2) zwischen 5° und 15°, bevorzugt zwischen 5° und 10° liegt.

13. Vorrichtung nach einem der vorhergehenden Ansprüche, bei welcher die Bilderfassungseinrichtung (9) zur Bildung eines weiteren Beobachtungsstrahls (7b) zur Beobachtung des Wechselwirkungsbereichs (18) aus einer weiteren Beobachtungsrichtung (R2) ausgebildet ist und bei der die Abbildungsoptik (14) zur Erzeugung eines weiteren Bildes (B2) des Wechselwirkungsbereichs (18) aus der weiteren Beobachtungsrichtung (R2) ausgebildet ist.

14. Vorrichtung nach Anspruch 13, bei der die Auswerteeinrichtung (19) ausgebildet ist, einen anhand des weiteren Bildes (B2) des Wechselwirkungsbereichs (18) bestimmten Intensitätswert (I2) mit einem anhand eines in einer Projektion in eine Ebene (X, Y) senkrecht zur Strahlachse (13) des Hochenergiestrahls (2) entgegen der Vorschubrichtung (v) aufgenommenen Bildes (B1) des Wechselwirkungsbereichs (18) bestimmten Intensitätswerts (I1) zu vergleichen.

15. Vorrichtung nach einem der vorhergehenden Ansprüche, bei welcher die Beobachtungsrichtung (R3, R4) in einer Projektion in einer Ebene (X, Y) senkrecht zur Strahlachse (13) des Hochenergiestrahls (2) nicht in oder entgegen der Vorschubrichtung (v) des Schneidprozesses verläuft und bei der die Auswerteeinrichtung (19) ausgebildet ist, anhand des aufgenommenen Bildes (B3, B4) eine Gratbildung, Rauigkeit und/oder Riefenbildung als charakteristische Kenngröße(n) der Schnittfuge (16) zu ermitteln.

16. Vorrichtung nach einem der vorhergehenden Ansprüche, weiter umfassend eine Beleuchtungsquelle (10) zur Beleuchtung des Werkstücks (3) in dem zu überwachenden Bereich (15).

17. Vorrichtung nach einem der vorhergehenden Ansprüche, bei welcher die Bilderfassungseinrichtung (9) zur Aufnahme des Bildes (B1) durch eine Düsenöffnung (5a) einer Laserbearbeitungsdüse (5) zum Durchtritt des Laserstrahls (2) auf das Werkstück (3) ausgebildet ist.

18. Vorrichtung nach einem der vorhergehenden Ansprüche, weiter umfassend: eine Steuer- und/oder Regeleinrichtung (20) zur Steuerung und/oder Regelung von Parametern des Schneidprozesses in Abhängigkeit von der mindestens einen ermittelten charakteristischen Kenngröße (α).

19. Vorrichtung nach einem der vorhergehenden Ansprüche, bei der die Auswerteeinrichtung (19) ausgebildet ist, anhand des erfassten Wechselwirkungsbereichs (18) einen Schneidfrontwinkel (α) der Schnittfuge (16) und/oder eine Überschreitung und/oder Unterschreitung eines vorgegebenen Schneidfrontwinkels (α_{G}) der Schnittfuge (16) als charakteristische Kenngröße(n) des Schneidprozesses zu ermitteln, und wobei die Vorrichtung (1) weiter umfasst: eine Regeleinrichtung (20) zur Regelung des Schneidfrontwinkels (α) auf einen vorgegebenen, konstanten Wert (α_{G}) durch Beeinflussen mindestens eines Stellparameters (v, P) des Schneidprozesses.

20. Vorrichtung nach Anspruch 19, bei welcher die Regeleinrichtung (20) ausgebildet ist, den Stellparameter (v, P) zur Regelung des Schneidfrontwinkels (α) in Abhängigkeit von einer an dem Werkstück (3) zu schneidenden Kontur (31, 34) auszuwählen.

21. Verfahren zur Überwachung, insbesondere zur Regelung, eines Schneidprozesses an einem Werkstück (3), umfassend:
Fokussieren eines Hochenergiestrahls (2), insbesondere eines Laserstrahls, auf das Werkstück (3),
Erfassen eines zu überwachenden Bereichs (15) des Werkstücks (3), der einen Wechselwirkungsbereich (18) des Hochenergiestrahls (2) mit dem Werkstück (3) umfasst,
Ermitteln mindestens einer charakteristischen Kenngröße (α) des Schneidprozesses, insbesondere einer bei dem Schneidprozess gebildeten Schnittfuge (16), anhand des erfassten Wechselwirkungsbereichs (18),
**gekennzeichnet durch**
Bilden mithilfe einer Abbildungsoptik eines Beobachtungsstrahls (7a) zur Beobachtung des Wechselwirkungsbereichs (18) aus einer unter einem Winkel (β) zur Strahlachse (13) des Hochenergiestrahls (3) verlaufenden Beobachtungsrichtung (R1), sowie Erzeugen eines Bildes (B1) des Wechselwirkungsbereichs (18) aus der unter dem Winkel (β) zur Strahlachse (13) des Hochenergiestrahls (3) verlaufenden Beobachtungsrichtung (R1), wobei der Beobachtungsstrahl (7a) exzentrisch zur zentralen Achse des Fokussierelements (4) läuft und somit im konvergenten Strahlengang zwischen dem Fokussierelement (4) und dem Werkstück (3) unter dem Winkel (β) zur Strahlachse (13) des Hochenergiestrahls (3) verläuft, sowie Verändern der Ausrichtung der Beobachtungsrichtung (R1, R2, ...) in einer Projektion in eine Ebene (X, Y) senkrecht zur Strahlachse (13) in Abhängigkeit von einer Vorschubrichtung (v) des Schneidprozesses.

## Claims

1. A device (1) for monitoring, in particular for regulating, a cutting process on a workpiece (3), comprising:
a focusing element (4) for focusing a high-energy beam (2), in particular a laser beam, onto the workpiece (3),
an image capture apparatus (9) for capturing a region (15) at the workpiece (3) to be monitored, said region comprising an interaction region (18) of the high-energy beam (2) with the workpiece (3), and an evaluation apparatus (19) embodied to determine at least one characteristic variable (α) of the cutting process, in particular of a kerf (16) formed during the cutting process, on the basis of the captured interaction region (18), wherein
the image capture apparatus (9) is embodied to form an observation beam (7a) for observing the interaction region (18) from an observation direction (R1) extending at an angle (β) to the beam axis (13) of the high-energy beam (2) and
wherein the image capture apparatus (9) comprises an imaging optics (14) for generating an image (B1) of the interaction region (18) from the observation direction (R1) extending at the angle (β) to the beam axis (13) of the high-energy beam (2), and
a detector (12), in particular a camera, with a detector surface (12a), at which the image (B1) is generated,
**characterized in that**
the imaging optics (14) is embodied to image, on the detector surface (12a), the observation beam (7a) which extends eccentrically to the central axis of the focusing element (4) and thus extends in the convergent beam path between the focusing element (4) and the workpiece (3) at the angle (β) to the beam axis (13) of the high-energy beam (2), wherein the device (1) comprises a control apparatus (20) which is embodied to modify the alignment of the observation direction (R1, R2, ...) in a projection in a plane (X, Y) perpendicular to the beam axis (13) in a manner dependent on an advance direction (v) of the cutting process.

2. The device as claimed in claim 1, wherein the image capture apparatus (9) is embodied to modify the alignment of the observation direction (R1) of the observation beam (7a) in a plane (X, Y) perpendicular to the beam axis (13) of the high-energy beam (2).

3. The device as claimed in claim 1 or 2, wherein the imaging optics (14) is embodied to generate a plurality of images (B1 to B4) of the interaction region (18) from differently aligned observation directions (R1 to R4).

4. The device as claimed in claim 2 or 3, wherein the image capture apparatus (9) has a stop (25) for modifying the alignment of the observation direction (R1) of the observation beam (7a).

5. The device as claimed in claim 3, wherein the imaging optics (14) has a plurality of imaging optical elements (22, 23) for generating the plurality of images (B1 to B4).

6. The device as claimed in claim 5, wherein the plurality of imaging optical elements (22, 23) form a grid arrangement (24).

7. The device as claimed in claim 3, wherein, for the purposes of generating the plurality of images (B1 to B4), the imaging optics (14) has an apparatus (27) for forming a respective observation beam (7a, 7b) by influencing a beam direction of an observation beam path (7).

8. The device as claimed in one of the preceding claims, wherein the control apparatus (20) is embodied to keep the alignment of the observation direction (R1) constant relative to the advance direction (v).

9. The device as claimed in one of the preceding claims, wherein the observation direction (R1) extends counter to an advance direction (v) of the cutting process in a plane (X, Y) perpendicular to the beam axis (13) of the high-energy beam (2).

10. The device as claimed in claim 9, wherein the evaluation apparatus (19) is embodied to determine a cutting front angle (α) of the kerf (16) and/or an overshoot and/or undershoot of a predetermined cutting front angle (α_{G}) of the kerf (16) as characteristic variable(s) of the cutting process on the basis of the captured interaction region (18).

11. The device as claimed in claim 10, wherein the numerical aperture of the imaging optics is selected such that the angle (β) at which the observation direction (R1) extends in relation to the beam axis (13) of the high-energy beam (2) deviates by less than 5°, preferably by less than 2° from the predetermined cutting front angle (α_{G}).

12. The device as claimed in one of the preceding claims, wherein the numerical aperture of the imaging optics is selected such that the angle (β) from the observation direction (R1) to the beam axis (13) of the high-energy beam (2) lies between 5° and 15°, preferably between 5° and 10°.

13. The device as claimed in one of the preceding claims, wherein the image capture apparatus (9) is embodied to form a further observation beam (7b) for observing the interaction region (18) from a further observation direction (R2) and wherein the imaging optics (14) is embodied to generate a further image (B2) of the interaction region (18) from the further observation direction (R2).

14. The device as claimed in claim 13, wherein the evaluation apparatus (19) is embodied to compare an intensity value (12) determined on the basis of the further image (B2) of the interaction region (18) with an intensity value (11) determined on the basis of an image (B1) of the interaction region (18) captured counter to the advance direction (v) in a projection in a plane (X, Y) perpendicular to the beam axis (13) of the high-energy beam (2).

15. The device as claimed in one of the preceding claims, wherein the observation direction (R3, R4) in a projection in a plane (X, Y) perpendicular to the beam axis (13) of the high-energy beam (2) does not extend in, or counter to, the advance direction (v) of the cutting process and wherein the evaluation apparatus (19) is embodied to determine burr formation, roughness and/or furrow formation as characteristic variable(s) of the kerf (16) on the basis of the recorded image (B3, B4).

16. The device as claimed in one of the preceding claims, furthermore comprising an illumination source (10) for illuminating the workpiece (3) in the region (15) to be monitored.

17. The device as claimed in one of the preceding claims, wherein the image capture apparatus (9) is embodied to record the image (B1) through a nozzle opening (5a) of a laser processing nozzle (5) for the passage of the laser beam (2) to the workpiece (3).

18. The device as claimed in one of the preceding claims, further comprising: an open-loop and/or closed-loop control apparatus (20) for controlling and/or regulating parameters of the cutting process in a manner dependent on the at least one determined characteristic variable (α).

19. The device as claimed in one of the preceding claims, wherein the evaluation apparatus (19) is embodied to determine a cutting front angle (α) of the kerf (16) and/or an overshoot and/or undershoot of a predetermined cutting front angle (α_{G}) of the kerf (16) as characteristic variable(s) of the cutting process on the basis of the captured interaction region (18) and wherein the device (1) further comprises:
a closed-loop control apparatus (20) for regulating the cutting front angle (α) to a predetermined constant value (α_{G}) by influencing at least one manipulated parameter (v, P) of the cutting process.

20. The device as claimed in claim 19, in which the closed-loop control apparatus (20) is embodied to select the manipulated parameter (v, P) for regulating the cutting front angle (α) in a manner dependent on a contour (31, 34) to be cut into the workpiece (3).

21. A method for monitoring, in particular for regulating, a cutting process on a workpiece (3), comprising:
focusing a high-energy beam (2), in particular a laser beam, onto the workpiece (3),
capturing a region (15) of the workpiece (3) to be monitored, said region comprising an interaction region (18) of the high-energy beam (2) with the workpiece (3),
determining at least one characteristic variable (α) of the cutting process, in particular of a kerf (16) formed during the cutting process, on the basis of the captured interaction region (18),
**characterized by**
forming, by means of an imaging optics, an observation beam (7a) for observing the interaction region (18) from an observation direction (R1) extending at an angle (β) to the beam axis (13) of the high-energy beam (2), and
generating an image (B1) of the interaction region (18) from the observation direction (R1) extending at the angle (β) to the beam axis (13) of the high-energy beam (2), wherein the observation beam (7a) extends eccentrically to the central axis of the focusing element (4) and thus extends in the convergent beam path between the focusing element (4) and the workpiece (3) at the angle (β) to the beam axis (13) of the high-energy beam (2), and also modifying the alignment of the observation direction (R1, R2, ...) in a projection in a plane (X, Y) perpendicular to the beam axis (13) in dependence on an advance direction (v) of the cutting process.

## Revendications

1. Dispositif (1) de surveillance, en particulier pour le réglage, d'un processus de coupe d'une pièce (3), comprenant :
un élément de focalisation (4) pour focaliser un faisceau de haute énergie (2), en particulier un faisceau laser, sur la pièce (3), un dispositif de détection d'image (9) pour détecter une région à surveiller (15) sur la pièce (3), qui comprend une région d'interaction (18) du faisceau de haute énergie (2) avec la pièce (3), ainsi qu'un dispositif d'analyse (19) qui est réalisé pour déterminer à l'aide de la région d'interaction détectée (18) au moins une grandeur caractéristique (α) du processus de coupe, en particulier un joint de coupe (16) formé lors du processus de coupe,
le dispositif de détection d'image (9) étant réalisé pour former un faisceau d'observation (7a) pour observer la région d'interaction (18) à partir d'une direction d'observation (R1) s'étendant suivant un angle (β) par rapport à l'axe de faisceau (13) du faisceau de haute énergie (3), et
le dispositif de détection d'image (9) comprenant une optique de reproduction (14) pour générer une image (B1) de la région d'interaction (18) à partir de la direction d'observation (R1) s'étendant suivant l'angle (β) par rapport à l'axe de faisceau (13) du faisceau de haute énergie (3), ainsi qu'un détecteur (12), en particulier une caméra, avec une surface de détection (12a), au niveau de laquelle l'image (B1) est générée,
l'optique de reproduction (14) étant réalisée de telle sorte qu'elle reproduise sur la surface de détection (12a) le faisceau d'observation (7a) s'étendant de manière excentrée par rapport à l'axe central de l'élément de focalisation (4) et de ce fait suivant une trajectoire de faisceau convergente entre l'élément de focalisation (4) et la pièce (3) suivant l'angle (β) par rapport à l'axe de faisceau (13) du faisceau de haute énergie (3),
**caractérisé en ce que**
le dispositif (1) comprend un dispositif de commande (20) qui est réalisé de manière à faire varier l'orientation de la direction d'observation (R1, R2,...) en projection dans un plan (X, Y) perpendiculairement à l'axe de faisceau (13) en fonction d'une direction d'avance (v) du processus de coupe.

2. Dispositif selon la revendication 1, dans lequel le dispositif de détection d'image (9) est réalisé de manière à faire varier l'orientation de la direction d'observation (R1) du faisceau d'observation (7a) dans un plan (X, Y) perpendiculairement à l'axe de faisceau (13) du faisceau de haute énergie (2).

3. Dispositif selon la revendication 1 ou 2, dans lequel l'optique de reproduction (14) est réalisée pour générer une pluralité d'images (B1 à B4) de la région d'interaction (18) à partir de directions d'observation orientées différemment (R1 à R4).

4. Dispositif selon la revendication 2 ou 3, dans lequel le dispositif de détection d'image (9) présente un diaphragme (25) pour faire varier l'orientation de la direction d'observation (R1) du faisceau d'observation (7a).

5. Dispositif selon la revendication 3, dans lequel l'optique de reproduction (14) présente, pour générer la pluralité d'images (B1 à B4), une pluralité d'éléments optiques de reproduction (22, 23) .

6. Dispositif selon la revendication 5, dans lequel la pluralité d'éléments optiques de reproduction (22, 23) forme un agencement en réseau (24).

7. Dispositif selon la revendication 3, dans lequel l'optique de reproduction (14) pour générer la pluralité d'images (B1 à B4) présente un dispositif (27) pour former un faisceau d'observation respectif (7a, 7b) en influençant une direction de faisceau d'une trajectoire de faisceau d'observation (7).

8. Dispositif selon l'une quelconque des revendications précédentes, dans lequel le dispositif de commande (20) est réalisé pour maintenir constante l'orientation de la direction d'observation (R1) par rapport à la direction d'avance (v).

9. Dispositif selon l'une quelconque des revendications précédentes, dans lequel la direction d'observation (R1) s'étend dans un plan (X, Y) perpendiculairement à l'axe de faisceau (13) du faisceau de haute énergie (2) dans le sens opposé à une direction d'avance (v) du processus de coupe.

10. Dispositif selon la revendication 9, dans lequel le dispositif d'analyse (19) est réalisé pour déterminer, à l'aide de la région d'interaction détectée (18), un angle de front de coupe (α) du joint de coupe (16) et/ou un dépassement et/ou une valeur insuffisante d'un angle de front de coupe prédéfini (α_{G}) du joint de coupe (16) en tant que grandeur(s) caractéristique(s) du processus de coupe.

11. Dispositif selon la revendication 10, dans lequel l'ouverture numérique de l'optique de reproduction (14) est choisie de telle sorte que l'angle (β), suivant lequel la direction d'observation (R1) s'étend par rapport à l'axe de faisceau (13) du faisceau de haute énergie (3), s'écarte de moins de 5°, de préférence de moins de 2°, de l'angle de front de coupe prédéfini (α_{G}).

12. Dispositif selon l'une quelconque des revendications précédentes, dans lequel l'ouverture numérique de l'optique de reproduction (14) est choisie de telle sorte que l'angle (β) de la direction d'observation (R1) par rapport à l'axe de faisceau (13) du faisceau de haute énergie (2) soit situé entre 5° et 15°, de préférence entre 5° et 10°.

13. Dispositif selon l'une quelconque des revendications précédentes, dans lequel le dispositif de détection d'image (9) est réalisé pour former un faisceau d'observation supplémentaire (7b) pour observer la région d'interaction (18) à partir d'une direction d'observation supplémentaire (R2) et dans lequel l'optique de reproduction (14) est réalisée pour générer une image supplémentaire (B2) de la région d'interaction (18) à partir de la direction d'observation supplémentaire (R2).

14. Dispositif selon la revendication 13, dans lequel le dispositif d'analyse (19) est réalisé de manière à comparer une valeur d'intensité (I2) déterminée à l'aide de l'image supplémentaire (B2) de la région d'interaction (18) à une valeur d'intensité (I1) déterminée à l'aide d'une image (B1) de la région d'interaction (18) enregistrée en projection dans un plan (X, Y) perpendiculairement à l'axe de faisceau (13) du faisceau de haute énergie (2) dans le sens opposé à la direction d'avance (v).

15. Dispositif selon l'une quelconque des revendications précédentes, dans lequel la direction d'observation (R3, R4) ne s'étend pas, en projection dans un plan (X, Y) perpendiculairement à l'axe de faisceau (13) du faisceau de haute énergie (2), dans la direction d'avance (v) ou s'étendant dans la direction opposée à la direction d'avance (v) du processus de coupe et dans lequel le dispositif d'analyse (19) est réalisé de manière à déterminer, à l'aide de l'image enregistrée (B3, B4), une formation d'arêtes, une rugosité et/ou une formation de stries en tant que grandeur(s) caractéristique(s) du joint de coupe (16).

16. Dispositif selon l'une quelconque des revendications précédentes, comprenant en outre une source d'éclairage (10) pour éclairer la pièce (3) dans la région (15) à surveiller.

17. Dispositif selon l'une quelconque des revendications précédentes, dans lequel le dispositif de détection d'image (9) est réalisé pour enregistrer l'image (B1) par une ouverture de buse (5a) d'une buse de traitement laser (5) pour le passage du faisceau laser (2) sur la pièce (3).

18. Dispositif selon l'une quelconque des revendications précédentes, comprenant en outre un dispositif de commande et/ou de réglage (20) pour commander et/ou régler les paramètres du processus de coupe en fonction de l'au moins une grandeur caractéristique déterminée (α).

19. Dispositif selon l'une quelconque des revendications précédentes, dans lequel le dispositif d'analyse (19) est réalisé pour déterminer, à partir de la région d'interaction détectée (18), un angle de front de coupe (α) du joint de coupe (16) et/ou un dépassement et/ou une valeur insuffisante d'un angle de front de coupe prédéfini (αG) du joint de coupe (16) en tant que grandeur(s) caractéristique(s) du processus de coupe, et le dispositif (1) comprenant en outre : un dispositif de réglage (20) pour régler l'angle de front de coupe (α) à une valeur constante prédéfinie (αG) en influençant au moins un paramètre de réglage (v, P) du processus de coupe.

20. Dispositif selon la revendication 19, dans lequel le dispositif de réglage (20) est réalisé pour sélectionner le paramètre de réglage (v, P) pour le réglage de l'angle de front de coupe (α) en fonction d'un contour (31, 34) à découper au niveau de la pièce (3).

21. Procédé de surveillance, en particulier de réglage, d'un processus de coupe sur une pièce (3), comprenant : l
a focalisation d'un faisceau de haute énergie (2), en particulier d'un faisceau laser, sur la pièce (3),
la détection d'une région à surveiller (15) de la pièce (3), qui comprend une région d'interaction (18) du faisceau de haute énergie (2) avec la pièce (3),
la détermination d'au moins une grandeur caractéristique (α) du processus de coupe, en particulier d'un joint de coupe (16) formé lors du processus de coupe, à l'aide de la région d'interaction détectée (18),
**caractérisé par**
la formation, avec une optique de reproduction, d'un faisceau d'observation (7a) pour observer la région d'interaction (18) à partir d'une direction d'observation (R1) s'étendant suivant un angle (β) par rapport à l'axe de faisceau (13) du faisceau de haute énergie (3), ainsi que
la génération d'une image (B1) de la région d'interaction (18) à partir de la direction d'observation (R1) s'étendant suivant l'angle (β) par rapport à l'axe de faisceau (13) du faisceau de haute énergie (3), le faisceau d'observation (7a) s'étendant de manière excentrée par rapport à l'axe central de l'élément de focalisation (4) et de ce fait suivant une trajectoire de faisceau convergente entre l'élément de focalisation (4) et la pièce (3) suivant l'angle (β) par rapport à l'axe de faisceau (13) du faisceau de haute énergie (3), et
la variation de l'orientation de la direction d'observation (R1, R2,...) en projection dans un plan (X, Y) perpendiculairement à l'axe de faisceau (13) en fonction d'une direction d'avance (v) du processus de coupe.
